# EUROPÄISCHE PATENTSCHRIFT

(11) **EP 3 809 309 B1**
(45) Veröffentlichungstag und Bekanntmachung des Hinweises auf die Patenterteilung: **19.07.2023**
(21) Anmeldenummer: 19203720.8
(22) Anmeldetag: 17.10.2019
(51) Int. Cl.: G06K 7/10, B65G 1/137, G01S 13/75, G06Q 10/087, G06Q 10/0875, G06Q 50/28

(54) **LAGERSYSTEM MIT EINER VIELZAHL VON ABLAGEFÄCHERN UND/ODER ABLAGEORTEN SOWIE VERFAHREN ZUR ERFASSUNG EINES ZUGRIFFES AUF ABLAGEFÄCHER UND/ODER ABLAGEORTE FÜR EIN LAGERSYSTEM**
STORAGE SYSTEM WITH A PLURALITY OF STORAGE COMPARTMENTS AND/OR STORAGE PLACES AND METHOD FOR DETECTING ACCESS TO STORAGE COMPARTMENTS AND/OR STORAGE PLACES FOR A STORAGE SYSTEM
SYSTÈME DE STOCKAGE COMPRENANT UNE PLURALITÉ DE COMPARTIMENTS DE STOCKAGE ET/OU PLACES DE STOCKAGE ET MÉTHODE POUR DÉTECTER L'ACCÈS AUX COMPARTIMENTS DE STOCKAGE ET/OU PLACES DE STOCKAGE POUR UN SYSTÈME DE STOCKAGE

(43) Veröffentlichungstag der Anmeldung: 21.04.2021
(73) Patentinhaber: Feig Electronic GmbH, 35781 Weilburg (DE)
(72) Erfinder: Desch, Markus, 35781 Weilburg (DE); Reichwein, Elmar, 35781 Weilburg (DE)
(74) Vertreter: Knefel, Cordula

(56) Entgegenhaltungen:
- EP-A1- 1 630 716
- EP-A1- 2 560 125
- EP-A1- 2 562 676
- EP-B1- 1 630 716
- EP-B1- 2 560 125
- EP-B1- 2 562 676
- DE-A1- 10 055 211
- DE-A1-102011 100 910
- DE-A1-102016 205 649
- DE-B4- 10 055 211
- US-A1- 2006 187 050
- US-A1- 2008 211 635
- US-A1- 2016 332 653

## Beschreibung

Die Erfindung betrifft ein Lagersystem zum Lagern von Waren gemäß dem Oberbegriff des Anspruches 1 sowie ein Verfahren zur Erfassung eines Zugriffs auf Ablagefächer und/oder Ablageorte für ein Lagersystem, das ein Entnehmen von Waren aus den Ablagefächern oder den Ablageorten oder ein Bestücken der Ablagefächer oder der Ablageorte mit Waren automatisch erfasst.

Lager mit einer Vielzahl von Fächern sind in Industriebetrieben aber auch in anderen Betrieben wie beispielsweise Postbetrieben, Kaufhäusern und dergleichen weit verbreitet. In den einzelnen Fächern werden dabei Waren vorgehalten.

Die falsche Bestückung eines Lagerregals in einem derartigen Betrieb beziehungsweise die Entnahme falscher Waren aus dem Lagerregal führt generell zu unnötigen Zeitverlusten beziehungsweise kann beispielsweise im produzierenden Gewerbe aufgrund der Nichtverfügbarkeit der richtigen Bauteile schnell zu einer Produktionsverzögerung oder gar einem kurzzeitigen Stopp eines Produktionsprozesses führen. Genauso können Waren in einem Kaufhaus nicht mehr verfügbar oder nicht auffindbar sein, obwohl das System noch einen Vorrat dieser Waren anzeigt.

Auch in Postbeförderungsbetrieben kann die falsche Zuordnung von Pakten oder Päckchen, die gemäß der Erfindung unter den Begriff "Waren" fallen sollen, zu einer verzögerten oder falschen Zustellung führen.

Eine falsche Entnahme einer Ware oder eine falsche Bestückung des Lagerregals führt zu falschem Lagerbestandsbeziehungsweise Inventurzahlen.

Auch eine Kontrolle der Entnahme von Teilen aus einem Lagerregal sowie das Bestücken eines Lagerregals mit Waren ist für die automatisierte Lagerverwaltung eines Unternehmens von großer Bedeutung.

Unter diesen Aspekten wurden in der Vergangenheit erhebliche Anstrengungen unternommen, um die Gefahr, dass einem Lagerregal falsche Waren entnommen werden und/oder dass die Fächer eines Lagerregals mit falschen Waren bestückt werden, zu reduzieren. Verschiedene Ansätze hierzu sehen vor, Lager der eingangs genannten Art einzusetzen, bei denen das jeweilige Lagerregal mit einer Einrichtung zur automatischen Erfassung des Zugriffs auf Fächer des betreffenden Lagerregals ausgestattet ist, wobei insbesondere im Falle eines falschen Zugriffs ein Alarm ausgelöst werden kann.

Zum Stand der Technik (EP 1 630 716 B1) gehört ein Lager mit einem eine Vielzahl von Fächern aufweisenden Lagerregal und einer Einrichtung, die ein Hineingreifen in Fächer des Lagerregals, um diesem Gegenstände zu entnehmen oder diese mit Gegenständen zu bestücken, automatisch erfasst, wobei die Einrichtung zur Erfassung des Zugriffs auf Fächer des Lagerregals eine Vielzahl von RFID-Transponder, die jeweils einem Fach des Lagerregals zugeordnet sind, und ein tragbares elektronisches Gerät, das ein RFID-Lesegerät zur automatischen Identifizierung der den Fächern zugeordneten RFID-Transpondern aufweist, umfasst, wobei das tragbare elektronische Gerät mit Befestigungsmitteln zu dessen Befestigung am Unterarm, am Handgelenk oder an der Hand einer Person ausgestattet ist, und eine zusätzliche Sende- und/oder Empfangseinheit zur drahtlosen Kommunikation mit einer Basisstation mittels eines zweiten, von RFID verschiedenen Übertragungsstandards aufweist.

Dieses zum Stand der Technik gehörende Lager weist den Nachteil auf, dass jedem Fach des Lagerregals genau ein passiver RFID-Transponder fest zugeordnet ist. RFID-Transponder weisen eine bevorzugte Polarisationsebene auf. Da die Transponder gemäß der EP 1 630 716 B1 in der Regel dieselbe Polarisationsebene aufweisen, kommt es häufig zu Fehlerfassungen, da Signale der Transponder benachbarter Fächer ebenfalls von dem RFID-Lesegerät erfasst werden. Es ist in diesem Fall keine eindeutige Zuordnung des RFID-Lesegerätes zu einem speziellen Transponder und damit zu einem speziellen Fach möglich.

Insbesondere da die Transponder im UHF-Bereich arbeiten, kommt es häufig zum Lesen von mehreren Transpondern, das heißt auch von Transpondern in Nachbarfächern. Der Lesebereich im UHF-Band ist nicht genau definierbar. Hierzu kommen Faktoren, wie zum Beispiel eine Verstimmung der Antenne, eine Ausrichtung der Antenne, Reflexionen beispielsweise an den Wänden des Regales usw..

Weiterhin gehören zum Stand der Technik (EP 2 646 947 B1) ein Verfahren und eine Vorrichtung zum Identifizieren eines Zugriffs auf Fächer eines Lagersystems. Gemäß diesem zum Stand der Technik gehörenden Verfahren wird aus dem Phasenverlauf der Antworten der Regaltransponder auf den richtigen Transponder und damit auf das richtige zugehörige Fach geschlossen. Dieses zum Stand der Technik gehörende Verfahren und die dazugehörige Vorrichtung weisen jedoch den Nachteil auf, dass die Erfassung des Phasenverlaufs sehr teuer ist, da es entweder teure Reader oder ICS (IC - integrierter Schaltkreis) erfordert.

Zum Stand der Technik (EP 2 560 125 A1) gehören ein Verfahren und ein Schreib-/Lesegerät für eine Anordnung mit einer Mehrzahl berührungslos auslesbarer Transponder.

Bei diesem Verfahren erkennt ein Schreib-/Lesegerät einen berührungslos lesbaren Transponder mit einer eindeutigen Identifizierungsnummer, wobei in einer Erkennungsphase ein erster der Transponder von dem Schreib-/Lesegerät erfasst wird und in einer nachfolgenden Haltephase die Identifizierungsnummer des ersten Transponders in einem Halteregister des Schreib-/Lesegerätes gespeichert wird, wonach in der Haltephase die weiteren der Transponder von dem Schreib-/Lesegerät ignoriert werden. Nach Beendigung der Haltephase wird die Identifizierungsnummer des ersten der Transponder aus dem Halteregister gelöscht. Durch dieses Verfahren wird verhindert, dass weitere Transponder, die sich in einem Empfangsbereich des Schreib-/Lesegerätes befinden, einen Produktionsprozess oder ähnliches stören, der schon mit dem zuerst erfassten Transponder korreliert ist. Dieses zum Stand der Technik gehörende Verfahren weist den Nachteil auf, dass dieses für die Lokalisierung von Lagereinheiten nicht einsetzbar ist, da in der Haltephase keine weiteren Transponder erkannt, beziehungsweise diese ignoriert werden, wodurch das Ablegen weiterer Waren zum Beispiel in einem Regal nicht erkannt werden würde.

Weiterhin gehört zum Stand der Technik (DE 10 2011 100 910 A1) ein Verfahren und System zur Lokalisierung von Lagereinheiten auf Basis von UHF-Transpondern in einem Lagersystem. Bei diesem zum Stand der Technik gehörenden Verfahren wird nach einer Initialisierungsphase in einer zweiten Phase, der Lokalisierungsphase, die eigentliche Lokalisierung durchgeführt. Dieses zum Stand der Technik gehörende Verfahren ist sehr aufwendig, da in einem ersten Schritt eine Initialisierungsphase durchgeführt werden muss. In der Initialisierungsphase werden die Transponder der im Lagersystem befindlichen Lagereinheiten mit der Leseeinrichtung ausgelesen, um einen Fingerabdruck der aktuellen Situation zu erhalten.

Darüber hinaus gehört zum Stand der Technik (EP 2 562 676 A1) ein Verfahren und Schreib-/Lesegerät für eine Anordnung mit einer Mehrzahl berührungslos auslesbarer Transponder. Auch bei diesem Verfahren wird jeweils die Identitätsnummer und die Anzahl von Merkmalen von den Transpondern über die Erfassung registriert und in einer Auswertephase werden für jeden der erfassten Transponder die Merkmale jeweils statistisch ausgewertet, wobei für jeden der Transponder statistische Größen ermittelt werden und jeweils anhand von Filterkriterien gefiltert werden, wobei die Identifizierungsnummern desjenigen oder derjenigen der Transponder, der oder die den Filterkriterien genügen, als erfasste Transponder als erfasst gemeldet wird oder gemeldet werden. Auch dieses zum Stand der Technik gehörende Verfahren ist sehr aufwendig, insbesondere für eine Erfassung der Lokalisierung von Waren. Hier ist ein sehr hoher Auswerteaufwand erforderlich, was sich in der Praxis als nachteilig auswirkt.

Zum Stand der Technik (DE 100 55 211 A1) gehört darüber hinaus eine Identifizierungs- und Steuerungsvorrichtung für eine Modellanlage mit wenigstens einem Modellfahrzeug, umfassend wenigstens einen am Modellfahrzeug angeordneten Transponder. Mit dieser zum Stand der Technik gehörenden Vorrichtung ist eine optimalere Identifizierung von Modellfahrzeugen möglich und damit eine verbesserte Steuerung einer Modellanlage. Gemäß diesem Stand der Technik erfolgt keine Lokalisierung von Waren sondern von Modellfahrzeugen. Hierzu ist vorgesehen, nicht nur Read-only-Transponder einzusetzen, sondern beschreibbare Transponder. Weiterhin ist eine Schreib-/Lesestation vorgesehen, die die Transponder beschreiben kann und die Transponder mit Datensätzen beschreibt.

Die Transponder erhalten hierzu beispielsweise zweibis sechsstellige Zugnummern, wodurch Zuordnungsvorgänge entfallen. Dieses Verfahren ist für die Lokalisierung von Waren zu aufwendig, da hierzu auf jeden Fall beschreibbare Transponder erforderlich sind und eine Schreib-/Lesestation.

Weiterhin gehört zum Stand der Technik (DE 10 2016 205 649 A1) eine aktive Antenne, insbesondere eine RFID-Antenne. Die RFID-Antenne weist eine Schaltung und einen Antennenabstrahlteil auf. Darüber hinaus weist die Schaltung eine mit dem Antennenpfad gekoppelte Kompensationsschaltung zur Unterdrückung des Trägersignals in einem ein Empfangssignal führenden Signalpfad der Antenne auf sowie einen Verstärker zur Verstärkung des Empfangssignals nach der Kompensationsschaltung. Ein Erfassen von Transpondern in dem Lagersystem, um eine eindeutige Zuordnung eines Ablageortes durchzuführen, ist aus diesem Stand der Technik nicht bekannt.

Weiterhin gehört zum Stand der Technik (US 2006/0187050 A1) ein RFID-Transponder oder Tags, die in Verbindung mit einer RFID-Schreib-/Lesestation für eine Vielzahl von Bestandskontrollen, Datenerfassungen und andere Zwecken betrieben werden. Hierfür wird ein verbessertes Antennensystem für RFID-Lesegeräte und Transponderanwendungen bereitgestellt. Gemäß diesem Stand der Technik ist kein Lagersystem zur Lokalisierung von Waren offenbart.

Darüber hinaus gehört zum Stand der Technik (US 2008/0211635 A1) ein RFID-Leser, der einen Signalgenerator zum Erzeugen elektrischer Hochfrequenzsignale und eine Antenne umfasst, der die elektrischen Hochfrequenzsignale in einem symmetrischen Modus zugeführt werden können, um ein elektromagnetisches Wechselfeld an der Antenne zu erzeugen. Eine Verbesserung der Erfassung von Waren zur Lokalisierung der Waren in dem Lagersystem ist gemäß diesem Stand der Technik nicht angegeben.

Darüber hinaus gehört zum Stand der Technik (US 2016/0332653 A1) ein System zum Verfolgen der Bewegung und des Status von nichtmotorisierten Fahrzeugen einschließlich Einkaufswagen.

Hierzu weist jeder Einkaufwagen einen Transceiver auf. Die Informationen dieser Wagentransceiver können dazu verwendet werden, um die Anzahl an Wagen zu schätzen, die an einer Kasse oder in einem Warenlager stehen. Bei diesen zum Stand der Technik gehörenden Verfahren werden die Wagen lediglich ungefähr geschätzt. Bei der Lokalisierung von Waren in einem Lagersystem ist jedoch eine sehr genaue Erfassung erforderlich, wo sich welche Ware befindet.

Das der Erfindung zugrundeliegende technische Problem besteht darin, ein Lagersystem und ein Verfahren anzugeben, mit dem im Falle von mehreren gelesenen Transpondern bestimmt werden kann, auf welchen Transponder und damit auf welches Ablagefach oder auf welchen Ablageort zugegriffen wurde.

Dieses technische Problem wird durch ein Lagersystem mit den Merkmalen gemäß Anspruch 1 sowie durch ein Verfahren mit den Merkmalen gemäß Anspruch 17 gelöst.

Das erfindungsgemäße Lagersystem,
- mit einer Vielzahl von Ablagefächern und/oder Ablageorten zum Lagern von Waren
- und mit wenigstens einer Vorrichtung zur Erfassung eines Zugriffs auf die Ablagefächer und/oder die Ablageorte, die ein Entnehmen von Waren aus den Ablagefächern oder den Ablageorten oder ein Bestücken der Ablagefächer oder der Ablageorte mit Waren automatisch erfasst,
- bei dem jedes Ablagefach und/oder jeder Ablageort wenigstens einen diesem Ablagefach oder Ablageort zugeordneten RFID-Transponder aufweist,
- bei dem die Vorrichtung zur Erfassung des Zugriffs mit Befestigungsmitteln an einer Person befestigbar ist,
- wobei die Vorrichtung zur Erfassung des Zugriffs auf die Ablagefächer und/oder die Ablageorte wenigstens ein RFID-Schreib-/Lesegerät oder ein RFID-Lesegerät aufweist, wobei jedes RFID-Schreib-/Lesegerät oder jedes RFID-Lesegerät wenigstens eine Antenne aufweist,
- wobei das RFID-Schreib-/Lesegerät oder das RFID-Lesegerät als ein Transponderantworten des wenigstens einen Transponders erfassendes RFID-Schreib-/Lesegerät oder RFID-Lesegerät ausgebildet ist,
- wobei eine Auswerteeinheit und/oder ein Host-System vorgesehen ist zur Zuordnung der Ware zu dem Ablagefach und/oder zu dem Ablageort des diesem zugeordneten Transponders,
   zeichnet sich dadurch aus,
- dass das RFID-Schreib-/Lesegerät oder das RFID-Lesegerät als ein wenigstens einen RSSI-Wert (Received Signal Strength Indicator) der Transponderantworten erfassendes und auswertendes RFID-Schreib-/Lesegerät oder RFID-Lesegerät ausgebildet ist,
- dass das RFID-Schreib-/Lesegerät oder das RFID-Lesegerät als ein den Transponder mit dem größten RSSI-Wert erfassendes RFID-Schreib-/Lesegerät oder RFID-Lesegerät ausgebildet ist, und
- dass an wenigstens einem Ablagefach und/oder an wenigstens einem Ablageort wenigstens zwei Transponder angeordnet sind, wobei Polarisationsebenen der beiden Transponder eines Ablagefaches oder eines Ablageortes zueinander orthogonal ausgebildet sind.

Dadurch, dass das erfindungsgemäße Lagersystem derart ausgebildet ist, dass das RFID-Schreib-/Lesegerät oder das RFID-Lesegerät als ein wenigstens einen RSSI-Wert (Received Signal Strength Indicator) der Transponderantworten erfassendes und auswertendes RFID-Schreib-/Lesegerät oder das RFID-Lesegerät ausgebildet ist, wird der Transponder ermittelt, in dessen Nähe das RFID-Schreib-/Lesegerät oder das RFID-Lesegerät gebracht wird. Es wird der RSSI-Wert des Transponders des Ablageortes erfasst, auf den der Nutzer zugreift, da der Nutzer das RFID-Schreib-/
Lesegerät oder das RFID-Lesegerät in die Nähe dieses Transponders bringt. Auch wenn mehrere Transponder Antworten an das RFID-Schreib-/Lesegerät oder das RFID-Lesegerät senden, wird der Transponder erfasst, von dem der RSSI-Wert am höchsten ist. Hierdurch ist es möglich, dass eine Auswerteeinheit den richtigen Transponder erfasst und damit die Ware dem Ablagefach und/oder dem Ablageort des diesem zugeordneten Transponders zuordnen kann.

Das RFID-Schreib-/Lesegerät oder das RFID-Lesegerät umfasst einen integrierten Empfangssignalstärke-Indikator (RSSI) für die von den Transpondern empfangenen Signale. Der Empfangssignalstärkeindikator erfasst für die Werte I und Q, nämlich die In-Phase und Quadratur-Phase eines komplexen Signales oder auch Vektorsignales, den Real- und Imaginärteil. Hierdurch ist es möglich, den Leistungspegel eines ankommenden Transpondersignales oder einer Transponderantwort zu messen. Die empfangenen Signale (I, Q) können beispielsweise auf zwei 4-Bit logarithmische A/D-Wandler geleitet werden. Die beiden erfassten logarithmischen Absolutwerte sind proportional zur Eingangsleistung an Mischereingangsports. Das Verhältnis zwischen den I- und Q-Werten ergibt die Phasenbeziehung zwischen der Lokaloszillator-(VCO)-Phase und der Eingangssignalphase.

Gemäß der Erfindung ist vorgesehen, dass die Vorrichtung zur Erfassung des Zugriffs auf die Ablagefächer und/oder die Ablageorte wenigstens ein RFID-Schreiblesegerät oder ein RFID-Lesegerät aufweist, wobei jedes RFID-Schreib-/Lesegerät oder jedes RFID-Lesegerät wenigstens eine Antenne aufweist.

Das RFID-Schreib-/Lesegerät oder das RFID-Lesegerät erfasst die Transponderantworten des wenigstens einen Transponders und erfasst darüber hinaus wenigstens einen RSSI-Wert der Transponderantworten.

Hierdurch ist ein fehlerfreies oder fast fehlerfreies Erfassen des korrekten Transponders, der einem Ablageort oder Ablagefach zugeordnet ist, möglich, so dass die Auswerteeinheit die Ware dem entsprechenden Ablageort oder Ablagefach zuverlässig zuordnen kann.

Mit dem erfindungsgemäßen Lagersystem ist es kein Problem, wenn das RFID-Schreib-/Lesegerät oder das RFID-Lesegerät die Signale mehrerer benachbarter Transponder erfasst, da der korrekte Transponder von dem Lagersystem ermittelbar ist.

Insbesondere wenn die Transponder im UHF-Bereich arbeiten, kommt es häufig zum Lesen der Transpondersignale oder der Transponderantworten von mehreren Transpondern, zum Beispiel von Transpondern von Nachbarfächern, da der Lesebereich im UHF-Bereich nicht genau definierbar ist.
Das RFID-Schreib-/Lesegerät oder das RFID-Lesegerät ist als ein Amplituden von Antwortsignalen der Transponder detektierendes RFID-Schreib-/Lesegerät oder RFID-Lesegerät ausgebildet.

Durch diese Amplitudendetektion ist es möglich, den Transponder zu erfassen, der für das RFID-Schreib-/Lesegerät oder das RFID-Lesegerät das stärkste Signal aussendet.

Gemäß einer vorteilhaften Ausführungsform der Erfindung ist vorgesehen, dass das RFID-Schreib-/Lesegerät oder das RFID-Lesegerät als ein sämtliche im Erfassungsbereich empfangene Transponderantworten auslesendes und auswertendes und den wenigstens einen RSSI-Wert der Transponder bestimmendes RFID-Schreib-/Lesegerät oder RFID-Lesegerät ausgebildet ist.

Gemäß dem erfindungsgemäßen Lagersystem ist es möglich, mehrere Transponderantworten von mehreren Transpondern zu erfassen. Gemäß der Erfindung werden sämtliche im Erfassungsbereich empfangene Transponderantworten ausgelesen und ausgewertet. Über die Bestimmung des wenigstens einen RSSI-Wertes des Transponders kann das RFID-Schreib-/ Lesegerät oder das RFID-Lesegerät bestimmen, welches der Transponder mit dem größten RSSI-Wert ist, und die Ware dem Ablagefach oder dem Ablageort zugeordneten Transponder zuordnen.

Gemäß einer weiteren vorteilhaften Ausführungsform der Erfindung ist vorgesehen, dass das RFID-Schreib-/Lesegerät oder das RFID-Lesegerät als ein sämtliche im Erfassungsbereich empfangene Transponderantworten der Transponder trennendes RFID-Schreib-/Lesegerät oder RFID-Lesegerät ausgebildet ist. Dieses so genannte Antikollisionsverfahren beinhaltet, dass sämtliche Transponder ausgelesen werden und die RSSI-Werte der Transponderantworten bestimmt werden. Hierdurch ist ein sehr genaues Auslesen und ein genaues Bestimmen des korrekten Transponders möglich.

Dieses Antikollisionsverfahren beinhaltet, dass das RFID-Schreib-/Lesegerät oder RFID-Lesegerät von mehreren Transpondern, beispielsweise von zwei Transpondern benachbarter Fächer in dem Regal Antworten erhält. Diese Signale werden getrennt, so dass das RFID-Schreib-/Lesegerät oder das RFID-Lesegerät erkennt, von welchem Transponder das Signal kommt. Es wird das Signal von dem Transponder verwendet, welcher das stärkste Signal sendet, da davon auszugehen ist, dass es sich um den Transponder handelt, der an dem Ablagefach oder Ablageort angeordnet ist, in das die Waren eingebracht oder aus dem die Ware entnommen wird.

Gemäß einer weiteren vorteilhaften Ausführungsform der Erfindung ist vorgesehen, dass das RFID-Schreib-/Lesegerät oder das RFID-Lesegerät als ein eine Anzahl von Antworten von Transpondern im Erfassungsbereich erfassendes RFID-Schreib-/Lesegerät oder RFID-Lesegerät ausgebildet ist.

Zusätzlich zur der Erfassung, welcher Transponder das stärkste Antwortsignal an das RFID-Schreib-/Lesegerät oder RFID-Lesegerät übermittelt, kann auch ausgewertet werden, wie viele Antworten von den verschiedenen Transpondern zurückübermittelt werden. Ist ein Transponder in einem benachbarten Ablagefach angeordnet und es sind beispielsweise Regalwände vorgesehen, schirmen die Regalwände das Transpondersignal von Transpondern in benachbarten Ablagefächern ab, sobald sich das RFID-Schreib-/Lesegerät oder RFID-Lesegerät in einem Regalfach befindet. Das RFID-Schreib-/ Lesegerät oder RFID-Lesegerät erhält dann nur noch die Antwort von dem korrekten Transponder, nämlich dem, der auch in dem Regalfach angeordnet ist, in dem sich das RFID-Schreib-/Lesegerät oder das RFID-Lesegerät während des aktuellen Bestückungs- oder Entnahmevorganges befindet. Das bedeutet, dass von dem Transponder oder den Transpondern im Nachbarregalfach weniger Antworten erhalten werden als von dem dem betreffenden Regalfach zugeordneten Transponder.

Gemäß einer weiteren vorteilhaften Ausführungsform der Erfindung ist vorgesehen, dass jedem Transponder in einem Host-System ein Ablagefach oder ein Ablageort zugewiesen ist.

Ein oder mehrere RFID-Transponder werden vorteilhaft an einem Ablageort oder einem Ablagefach positioniert und/oder montiert und ist/sind diesem Ablageort oder Ablagefach in einem Host-System zugewiesen, so dass von dem Host-System entsprechende Informationen des Ablageortes oder Ablagefaches erfasst werden können. Das Host-System kann auch als Zentraleinheit bezeichnet werden.

Vorteilhaft ist vorgesehen, dass das RFID-Schreib-/ Lesegerät oder das RFID-Lesegerät als ein den wenigstens einen Transponder mehrfach auslesendes RFID-Schreib-/Lesegerät oder RFID-Lesegerät ausgebildet ist.

Wird der Vorgang des Lesens des wenigstens einen Transponders mehrfach durchgeführt, können falsche Ergebnisse der RSSI-Werte, welche zum Beispiel durch Reflexionen oder schlechte Antennenausrichtung entstehen können, beispielsweise durch einen Algorithmus herausgerechnet werden.

Gemäß der Erfindung ist vorgesehen, dass an wenigstens einem Ablagefach und/oder einem Ablageort jeweils zwei Transponder angeordnet sind, wobei Polarisationsebenen der beiden Transponder eines Ablagefaches oder eines Ablageortes zueinander orthogonal ausgebildet sind.

Da RFID-Schreib-/Lesegeräte oder RFID-Lesegeräte Transponder, die eine senkrechte Polarisationsebene zu der Erfassungsebene der RFID-Schreib-/Lesegeräte oder der RFID-Lesegeräte haben, nicht erfasst werden, kann es vorkommen, dass, wenn lediglich ein Transponder pro Regalfach angeordnet ist, dass das RFID-Schreib-/Lesegerät oder das RFID-Lesegerät den Transponder nicht erfasst. Das heißt, die Transpondererfassung ist davon abhängig, ob das RFID-Schreib-/Lesegerät oder RFID-Lesegerät, welches beispielsweise an einem Arbeitshandschuh eines Nutzers angeordnet ist, horizontal oder vertikal in das Fach eingeführt wird. Durch das Anordnen von wenigstens zwei Transpondern an einem Ablagefach oder an einem Ablageort mit zueinander orthogonal angeordneten Polarisationsebenen ist gewährleistet, dass unabhängig von der Handhaltung oder der Ausrichtung des RFID-Schreib-/Lesegerätes oder des RFID-Lesegerätes der Transponder erfasst wird.

Eine vorteilhafte Weiterbildung der Erfindung sieht vor, dass an wenigstens einem Ablagefach und/oder an wenigstens einem Ablageort jeweils drei oder vier Transponder angeordnet sind, wobei wenigstens zwei Transponder zueinander orthogonale Polarisationsebenen aufweisen. Durch die Anordnung von drei Transpondern pro Ablagefach oder Ablageort ist für jede Ausrichtung des RFID-Schreib-/Lesegerätes oder des RFID-Lesegerätes, das heißt für jede Handausrichtung ein erfassbarer Transponder vorhanden.

In einer weiteren vorteilhaften Ausführungsform können auch vier Transponder pro Ablageort oder Ablagefach vorgesehen sein. In diesem Fall hat man den Fall ausgeschlossen, dass ein Linkshänder einen Handschuh an der linken Hand trägt und beispielsweise ein Transponder, der auf der rechten Seite im Regalfach angeordnet ist, nicht erfasst wird.

Gemäß einer besonders bevorzugten Ausführungsform der Erfindung ist das RFID-Schreib-/Lesegerät oder das RFID-Lesegerät mittels eines Arbeitshandschuhes mit oder ohne Finger oder eines Tragriemens an einer Hand, insbesondere auf einem Handrücken anordbar. Durch diese Ausführungsform ist gewährleistet, dass eine Bedienperson das Gerät an der Hand trägt und damit das RFID-Schreib-/Lesegerät oder RFID-Lesegerät automatisch den oder die Transponder eines Ablageortes oder Ablagefaches erfasst, ohne dass die Bedienperson ein gesondertes Gerät in der Hand halten muss und damit die Hände nicht frei hat.

Die Bedienperson kann also die Ware mit zwei Händen greifen und von einem Ort zum anderen Ort bringen und trotzdem erfolgt eine automatische Erfassung des Ablageortes oder Ablagefaches.

Eine andere Ausführungsform der Erfindung sieht vor, dass das RFID-Schreib-/Lesegerät oder das RFID-Lesegerät zwei Antennen aufweist, die senkrecht zueinander angeordnete Abstrahlrichtungen aufweisen.

Hierdurch ist gewährleistet, dass, wenn an einem Ablageort oder Ablagefach lediglich ein Transponder angeordnet ist, das RFID-Schreib-/Lesegerät oder das RFID-Lesegerät durch die Anordnung der zwei Antennen trotzdem den Transponder unabhängig von der Ausrichtung des RFID-Schreib-/ Lesegerätes oder RFID-Lesegerätes erfasst.

Bei dieser Ausführungsform ist vorteilhaft vorgesehen, dass das RFID-Schreib-/Lesegerät oder das RFID-Lesegerät wenigstens einen Lagesensor und/oder wenigstens einen Umschalter aufweist, derart, dass in Abhängigkeit der Lage der Antennen des RFID-Schreib-/Lesegerätes oder des RFID-Lesegerätes eine der beiden Antennen aktiv ist.

Die Energie, die beispielsweise von einem Akkumulator zur Verfügung gestellt wird, muss in diesem Fall nicht für zwei Antennen gleichzeitig vorgesehen sein. Es kann ein Lagesensor oder ein Umschalter vorgesehen sein, derart, dass genau die Antenne aktiv ist, die beispielsweise einen seitlich im Ablagefach oder im Ablageort angeordneten Transponder erfasst, je nachdem, ob die Hand mit dem RFID-Schreib-/ Lesegerät oder dem RFID-Lesegerät waagrecht oder horizontal in das Ablagefach oder an den Ablageort hinein- oder herangeführt wird.

Eine weitere vorteilhafte Ausführungsform der Erfindung sieht vor, dass an dem Arbeitshandschuh oder an dem Tragriemen wenigstens ein Anforderungstaster und/oder ein Taster zur Betätigung des Umschalters angeordnet ist.

Mit dem Anforderungstaster kann beispielsweise ein neuer Vorgang gestartet werden, der beispielsweise daraus besteht, die Ware in ein Ablagefach zu bringen oder aus einem Ablagefach zu entnehmen.

Der Umschalter dient dazu, beispielsweise die entsprechende Antenne in dem RFID-Schreib-/Lesegerät oder RFID-Lesegerät zu aktivieren.

Eine weitere vorteilhafte Ausführungsform der Erfindung sieht vor, dass das RFID-Schreib-/Lesegerät oder das RFID-Lesegerät lösbar an dem Tragriemen oder dem Arbeitshandschuh angeordnet ist.

Diese Ausführungsform weist den Vorteil auf, dass der Arbeitshandschuh oder Tragriemen personenbezogen, beispielsweise in der Größe der entsprechenden Hand ausgebildet sein kann und dass das RFID-Schreib-/Lesegerät oder das RFID-Lesegerät gelöst werden kann oder an einem beliebigen Arbeitshandschuh oder Tragriemen angeordnet werden kann. Auch können die Arbeitshandschuhe oder Tragriemen gereinigt oder gewaschen werden, wozu das RFID-Schreib-/Lesegerät oder das RFID-Lesegerät von dem Handschuh oder Tragriemen gelöst wird.

Eine weitere vorteilhafte Ausführungsform der Erfindung sieht vor, dass das RFID-Schreib-/Lesegerät oder das RFID-Lesegerät zusätzlich ein Identifikationsgerät für an den Waren angeordnete Identifikationsmittel, beispielsweise einen Barcodeleser aufweist. Hierdurch ist es möglich, die Waren zusätzlich zu identifizieren. Beispielsweise können die Waren einen Barcode aufweisen, der mit dem Identifikationsgerät ausgelesen werden kann. Mit der erfindungsgemäßen Vorrichtung ist es dann möglich, zum einen den Ablageort oder das Ablagefach zu bestimmen und zum anderen die Ware zu identifizieren.

Es können jedoch auch andere Identifikationsgeräte vorgesehen sein zum Identifizieren der Waren.

Eine weitere vorteilhafte Ausführungsform der Erfindung sieht vor, dass der Taster für die Betätigung des Umschalters und/oder der Anforderungstaster für die Vorrichtung zur Erfassung des Zugriffs auf die Ablagefächer und/oder die Ablageorte in dem Tragriemen oder dem Arbeitshandschuh angeordnet ist und
- dass zwischen dem oder den Tastern und dem RFID-Schreib-/Lesegerät oder zwischen dem oder den Tastern und dem RFID-Lesegerät eine aus Stoff bestehende Verbindungsleitung vorgesehen ist, wobei in dem Stoff elektrisch leitfähiges Material angeordnet ist,
- dass an dem RFID-Schreib-/Lesegerät oder dem RFID-Lesegerät ein erstes Teil wenigstens eines Druckkopfes angeordnet ist und dass an dem Arbeitshandschuh oder dem Tragriemen im Bereich der mit der aus Stoff und dem elektrisch leitfähigen Material bestehenden Verbindungsleitung ein als Gegenstück zum ersten Teil des Druccknopfes ausgebildetes zweites Teil des Druckknopfes angeordnet ist.

Hierdurch ist das RFID-Schreib-/Lesegerät oder das RFID-Lesegerät in einfachster Art und Weise von dem Arbeitshandschuh oder dem Tragriemen lösbar und es wird gleichzeitig eine elektrisch leitfähige Verbindung zwischen dem RFID-Schreiblesegerät oder dem RFID-Lesegerät und dem Taster für die Betätigung des Umschalters oder den Anforderungstaster ausgebildet.

Gemäß einer weiteren bevorzugten Ausführungsform der Erfindung ist vorgesehen, dass das RFID-Schreib-/Lesegerät oder RFID-Lesegerät einen Schalter zum Betätigen des RFID-Schreib-/Lesegerät oder RFID-Lesegerätes aufweist und dass der Schalter als ein aus wenigstens zwei Stofflagen, in denen elektrisch leitfähiges Material angeordnet ist, bestehender Schalter ausgebildet ist.

Die erfindungsgemäße Vorrichtung weist den Vorteil auf, dass die Verbindungsleitung zwischen dem Schalter und dem RFID-Schreib-/Lesegerät oder RFID-Lesegerät und, falls vorhanden, der Schalter aus Stoff bestehen, so dass die Teile, die zur Betätigung des RFID-Schreib-/Lesegerät oder RFID-Lesegerätes, beziehungsweise die Teile, die zur Herstellung der elektrischen Verbindung mit dem RFID-Schreib-/Lesegerät oder RFID-Lesegerät erforderlich sind, auf oder an dem Arbeitshandschuh oder dem Tragriemen aufgenäht oder angenäht werden können. Hierdurch wird eine anderweitige Befestigung, beispielsweise ein Verschweißen oder ein Heißkleben vermieden. Der Arbeitshandschuh oder der Tragriemen bleiben hierdurch sehr flexibel, so dass eine ungehinderte Bewegung der Hand möglich ist. Das Annähen hat darüber hinaus den Vorteil, dass diese Art der Verbindung einfach und ohne großes technisches Know-How hergestellt werden kann und dass diese Art der Verbindung darüber hinaus sehr haltbar ist. Außerdem müssen hierbei nicht unterschiedliche Materialien recycelt werden.

Darüber hinaus weist die erfindungsgemäße Vorrichtung vorteilhaft eine Druckknopfverbindung auf. Das RFID-Schreib-/Lesegerät oder RFID-Lesegerät weist einen ersten Teil wenigstens eines Druckknopfes auf und an dem Arbeitshandschuh oder dem Tragriemen ist das Gegenstück des Druccknopfes, das heißt der zweite Teil angeordnet. Hierdurch lässt sich die elektrische Verbindung von dem Arbeitshandschuh oder dem Tragriemen zu dem RFID-Schreib-/
Lesegerät oder RFID-Lesegerät in einfachster Art und Weise herstellen. Hierzu ist der Druckknopf vorteilhaft an dem Arbeitshandschuh oder dem Tragriemen im Bereich der mit der aus Stoff und dem elektrisch leitfähigen Material bestehenden Verbindungsleitung angeordnet.

Gemäß einer besonders bevorzugten Ausführungsform der Erfindung ist vorgesehen, dass das zweite Teil des Druccknopfes mit der aus Stoff bestehenden Verbindungsleitung und mit dem in dem Stoff angeordneten leitfähigen Material eine elektrische Verbindung ausbildet.

Hierdurch ist gewährleistet, dass von dem Schalter über die aus Stoff bestehende Verbindungsleitung, wobei in dem Stoff elektrisch leitfähiges Material angeordnet ist, eine elektrisch leitfähige Verbindung über den Druckknopf und der elektrisch leitfähigen Verbindungsleitung zu dem RFID-Schreib-/Lesegerät oder RFID-Lesegerät hergestellt ist.

Darüber hinaus können diese Teile durch Vernähen mit dem Arbeitshandschuh oder dem Tragriemen an diesen angeordnet werden.

Eine weitere vorteilhafte Ausführungsform der Erfindung sieht vor, dass der Taster des Umschalters und/oder der Anforderungstaster an einem Finger, insbesondere Zeigefinger des Arbeitshandschuhs oder an einer an einem Finger, insbesondere Zeigefinger befestigbaren Schlaufe des Tragriemens angeordnet ist.

Durch diese Ausbildung ist der Schalter mit einem Daumen betätigbar ausgebildet. Es besteht jedoch auch die Möglichkeit, den Schalter an einer Schlaufe eines anderen Fingers (Mittelfinger, Ringfinger oder kleiner Finger) zu befestigen. Ebenso kann der Schalter an dem Arbeitshandschuh an dem Mittelfinger, dem Ringfinger oder dem kleinen Finger angeordnet sein.

Hierzu ist der Schalter vorteilhaft an dem Arbeitshandschuh oder dem Tragriemen im Bereich des Fingers angeordnet, so dass mit dem Daumen durch eine einfache Seitwärtsbewegung der Schalter betätigt werden kann. Der Schalter ist besonders vorteilhaft im Bereich des Fingermittelgelenkes des betreffenden Fingers an dem Arbeitshandschuh oder dem Tragriemen angeordnet. Besonders bevorzugt ist der Schalter seitlich des Fingers an dem Arbeitshandschuh oder dem Tragriemen angeordnet. Die bevorzugte Ausführungsform ist die Anordnung am Zeigefinger.

Gemäß einer weiteren vorteilhaften Ausführungsform der Erfindung ist vorgesehen, dass das elektrisch leitfähige Material in dem Stoff der Verbindungsleitung als wenigstens eine elektrische Leitung ausgebildet ist. Es können ein oder mehrere elektrische Leiter vorgesehen sein. Beispielsweise ist es möglich, einen oder mehrere Metalldrähte oder einen oder mehrere Metallfäden, beispielsweise Litzen vorzusehen.

Gemäß einer weiteren vorteilhaften Ausführungsform der Erfindung ist vorgesehen, dass die wenigstens eine elektrische Leitung kurvenförmig oder mäanderförmig oder wellenlinienförmig oder in Zickzackform oder spiralförmig in der aus Stoff gebildeten Verbindungsleitung angeordnet ist.

Der Stoff ist vorteilhaft dehnbar ausgebildet. Der Stoff kann zumindest in einer Richtung dehnbar ausgebildet sein. Vorteilhaft ist der Stoff in mehreren Richtungen dehnbar ausgebildet. Hierdurch ist gewährleistet, dass der Stoff mit der wenigstens einen integrierten elektrischen Leitung gedehnt werden kann und die Bewegungsfreiheit nicht einschränkt.

Eine weitere vorteilhafte Ausführungsform der Erfindung sieht vor, dass der Arbeitshandschuh oder der Tragriemen eine Halterung zum lösbaren Haltern des RFID-Schreib-/ Lesegerätes oder des RFID-Lesegerätes aufweist und dass die Halterung aus Stoff besteht.

Diese Ausführungsform weist den Vorteil auf, dass das RFID-Schreib-/Lesegerät oder RFID-Lesegerät in einer Art Stofftasche an dem Arbeitshandschuh oder dem Tragriemen angeordnet werden kann. Die Stofftasche weist den Vorteil auf, dass auch die Stofftasche an dem Arbeitshandschuh oder dem Tragriemen mittels eines Nähvorganges befestigt werden kann.

Gemäß einer weiteren vorteilhaften Ausführungsform der Erfindung ist vorgesehen, dass die Halterung eine verschließbare und öffenbare Lasche aufweist. Mittels dieser Lasche wird das RFID-Schreib-/Lesegerät oder RFID-Lesegerät in der Halterung fixiert. Die Lasche kann beispielsweise mittels eines Klettverschlusses oder anderweitiger Verschlussvorrichtungen nach dem Verschließen fixiert werden.

Ist das RFID-Schreib-/Lesegerät oder das RFID-Lesegerät mit einem Identifikationsgerät kombiniert, das beispielsweise als Barcodelesegerät ausgebildet sein kann, weist die Lasche vorteilhaft einen Schlitz auf, durch den das Identifikationsgerät optisch Signale erfassen und aussenden kann.

Gemäß einer weiteren besonders bevorzugten Ausführungsform der Erfindung ist in dem RFID-Schreib-/Lesegerät oder RFID-Lesegerät wenigstens ein Bewegungssensor angeordnet.

Das RFID-Schreib-/Lesegerät oder RFID-Lesegerät erfasst über den Bewegungssensor, ob es bewegt wird. Wird es längere Zeit nicht bewegt, schaltet sich das RFID-Schreib-/Lesegerät oder RFID-Lesegerät automatisch ab. Hierdurch wird die Akkulaufzeit verlängert.

Eine weitere vorteilhafte Ausführungsform der Erfindung sieht vor, dass ein Erfassungsvorgang mit dem RFID-Schreib-/Lesegerät oder RFID-Lesegerät über einen Schalter oder über eine Handbewegung oder über wenigstens eine Taste auslösbar ist. Soll beispielsweise zusätzlich zu der Ablageorterkennung die Ware erfasst werden, kann dieser Vorgang vorteilhaft gesondert ausgelöst werden. Es besteht beispielsweise die Möglichkeit, dass das RFID-Schreib-/Lesegerät oder das RFID-Lesegerät einen an der Ware angeordneten Transponder erfasst.

Eine weitere vorteilhafte Ausführungsform der Erfindung sieht vor, dass die Druckknöpfe als Standarddruckknöpfe ausgebildet sind. Hierdurch wird die Herstellung der erfindungsgemäßen Vorrichtung besonders preiswert.

Die Druckknöpfe können beispielsweise mit einem Zackenring ausgebildet sein. Sie können bei dieser Ausbildung in den Handschuh oder den Tragriemen eingedrückt und verpresst werden. Hierdurch wird auch die elektrische Verbindung mit der aus Stoff bestehenden Verbindungsleitung hergestellt, wobei in dem Stoff das elektrisch leitfähige Material angeordnet ist. Die Zacken des Druckknopfes gelangen in Kontakt mit dem in dem Stoff angeordneten elektrisch leitfähigen Material, so dass eine elektrisch leitfähige Verbindung hergestellt wird.

Eine weitere vorteilhafte Ausführungsform sieht vor, dass in dem ersten Teil des Druckknopfes, der an dem RFID-Schreib-/Lesegerät oder RFID-Lesegerät angeordnet ist, eine Schraube angeordnet ist und dass die Schraube als eine in ein an einem oder in einem Gehäuse des RFID-Schreib-/ Lesegerät oder RFID-Lesegerätes angeordnetes Innengewinde greifend angeordnet ist. Hierdurch ist es möglich, durch die Schraube die Gehäuseteile lösbar fest miteinander zu verbinden. Hierdurch werden Teile eingespart und die Montage ist besonders einfach. Die Schraube kann zum Beispiel einen Außensechskant aufweisen, damit die Schraube mit dem Gehäuseteil verschraubt werden kann.

Eine weitere vorteilhafte Ausführungsform der Erfindung sieht vor, dass der erste Teil des Druckknopfes, der an dem RFID-Schreib-/Lesegerät oder RFID-Lesegerät angeordnet ist, mit einer in dem RFID-Schreib-/Lesegerät oder RFID-Lesegerät angeordneten Platine in Kontakt stehend ausgebildet ist.

Hierdurch wird gewährleistet, dass eine elektrische Verbindung von dem Schalter über die aus Stoff bestehende Verbindungsleitung, wobei in dem Stoff elektrische leitfähiges Material angeordnet ist, und über den Druckknopf eine elektrisch leitfähige Verbindung von dem Schalter bis zu der Platine besteht. Hierdurch ist es möglich, über den Schalter das RFID-Schreib-/Lesegerät oder RFID-Lesegerät zu betätigen.

Gemäß einer besonders bevorzugten Ausführungsform weist das RFID-Schreib-/Lesegerät oder RFID-Lesegerät eine Vorrichtung für eine Kommunikation mittels Funk auf. Hierdurch ist es möglich, Daten, die das RFID-Schreib-/ Lesegerät oder RFID-Lesegerät erfasst, unmittelbar über Funk an eine zentrale Erfassungs- und Steuerstelle zu übermitteln.

Eine weitere vorteilhafte Ausführungsform der Erfindung sieht vor,
- dass das RFID-Schreib-/Lesegerät oder das RFID-Lesegerät an einer Vorrichtung zur Anordnung an einer Hand anordbar ist,
- dass das RFID-Schreib-/Lesegerät oder das RFID-Lesegerät einen unsymmetrischen Antennenausgang aufweist,
- dass das RFID-Schreib-/Lesegerät oder das RFID-Lesegerät eine Nahfeldkoppeleinheit aufweist, die einen Balun zur Symmetrierung eines unsymmetrischen Signales aufweist und dass wenigstens eine elektrisch leitfähige Leitung zum Aufbau eines Feldes zur Ankopplung an einen Transponder vorgesehen ist,
- und dass die wenigstens eine elektrisch leitfähige Leitung der Nahfeldkoppeleinheit als nicht angepasste elektrisch leitfähige Leitung ausgebildet ist.

Eine weitere vorteilhafte Ausführungsform der Erfindung sieht vor,
- dass das RFID-Schreib-/Lesegerät oder das RFID-Lesegerät an einer Vorrichtung zur Anordnung an einer Hand anordbar ist,
- dass das RFID-Schreib-/Lesegerät oder das RFID-Lesegerät einen symmetrischen Antennenausgang aufweist,
- dass das RFID-Schreib-/Lesegerät oder das RFID-Lesegerät eine Nahfeldkoppeleinheit aufweist, die wenigstens eine elektrisch leitfähige Leitung zum Aufbau eines Feldes zur Ankopplung an einen Transponder aufweist,
- und dass die wenigstens eine elektrisch leitfähige Leitung der Nahfeldkoppeleinheit als nicht angepasste elektrisch leitfähige Leitung ausgebildet ist.

Diese beiden Ausführungsformen weisen den Vorteil auf, dass zusätzlich zur Ablageorterkennung Transponder an der Ware mit dem zur Ablageorterkennung vorgesehenen RFID-Schreib-/Lesegerät oder RFID-Lesegerät erfasst werden können.

Dieses RFID-Schreib-/Lesegerät oder dieses RFID-Lesegerät weist den Vorteil auf, dass die elektrisch leitfähige Leitung der Nahfeldkoppeleinheit eine nicht angepasste elektrisch leitfähige Leitung ist. Es ist keine Antenne vorgesehen, die an das RFID-Schreib-/Lesegerät oder RFID-Lesegerät angepasst werden muss. Hierdurch können RFID-Leseeinheiten verwendet werden, mit denen ein sogenanntes Miss-Match möglich ist. Im einfachsten Fall kann die elektrisch leitfähige Leitung als einfacher Draht oder als einfache Litze oder als elektrisch leitfähiges Garn oder als elektrisch leitfähiges Gewebe ausgebildet sein.

Eine UHF-RFID-Schreib-/Lesegerät oder RFID-Lesegerät ist ausreichend, um in einem Nahfeldbereich Transponder zu erfassen. Der reaktive Nahfeldbereich liegt bei 0 Zentimetern bis 5,3 Zentimetern (0 bis λ/2*π*), der strahlende Nahfeldbereich liegt bei 5,3 Zentimetern bis 66 Zentimetern (λ/2*π* bis 2λ), der Fernfeldbereich liegt bei mehr als 66 Zentimetern (größer 2λ). Im vorliegenden Fall liegt der Bereich, in dem das RFID-Schreib-/Lesegerät oder RFID-Lesegerät Transponder erfasst, bei vorzugsweise 3 bis 10 Zentimetern. Der Bereich kann sich jedoch auf bis zu 20 Zentimetern erstrecken.

Gemäß einer vorteilhaften Ausführungsform der Erfindung ist die elektrisch leitfähige Leitung als nicht leistungsangepasste elektrisch leitfähige Leitung ausgebildet. Diese Ausführungsform weist den Vorteil auf, dass eine aufwendige Anpassung eingespart werden kann.

Wie schon ausgeführt, ist eine Anpassung, insbesondere eine Leistungsanpassung an die RFID-Einheit nicht erforderlich.

Bei dem erfindungsgemäßen Lagersystem mit RFID-Schreib-/Lesegerät oder RFID-Lesegerät besteht der Vorteil, dass die Waren ohnehin in die Hand genommen werden müssen, um sie an einen anderen Platz zu stellen. Hierbei wird nun gleichzeitig der Vorgang "scannen" mit dem Vorgang "an einen anderen Platz stellen" zu einem gemeinsamen Vorgang vereint.

Da die Waren sowieso angefasst werden müssen, ist eine Nahfeldkoppeleinrichtung vorgesehen, die den Transponder nicht auf große Entfernung, sondern direkt an der Hand liest. Die Reichweite beträgt beispielsweise 3 bis 10 Zentimeter. Die Person fasst hierzu das Paket oder die Ware direkt im Bereich des Transponders an oder streicht mit der Hand über den Transponder, wenn sie das Paket oder die Ware erfassen und an einen anderen Ort stellen möchte.

Bei den beispielsweise 3 bis 10 Zentimetern befindet man sich bei den verwendeten UHF-Frequenzen noch im Nahfeld. In diesem Bereich können auch andere Kopplungsmechanismen zwischen RFID-Schreib-/Lesegerät oder RFID-Lesegerät und Transponder zur Energie- und Datenübertragung verwendet werden. Bei der vorliegenden erfindungsgemäßen Lösung wird zum einen die kapazitive Kopplung und zum anderen der Übertragungsmechanismus gekoppelter Leitungen verwendet.

Für die kapazitive Kopplung werden zwei Leitungen mit einem differentiellen Signal angesteuert (HF-Trägersignal, Hochfrequenzträgersignal). Im Idealfall sind beide Leitungen gleich lang, so dass beide Reflexionsstellen am Ende der Leitungen elektrisch gleich weit von der differentiellen Quelle entfernt sind. An den Enden bildet sich das maximale elektrische Feld aus.

Ist ein unsymmetrischer Antennenausgang vorgesehen, weist die Nahfeldkoppeleinheit einen Balun zur Symmetrierung des unsymmetrischen Signales auf. In diesem Fall liegt eine Speisung mit einem unipolaren Treiber vor. Der Balun ist vorgesehen, um ein differentielles Signal zu erzeugen. Ist eine RFID-Schreib-/Lesegerät oder RFID-Lesegerät mit einem symmetrischen Antennenausgang vorgesehen, wird direkt ein differentieller Treiber als Quelle verwendet.

Ein Balun ist ein Bauteil zur Wandlung zwischen einem symmetrischen Leitungssystem und einem unsymmetrischen Leitungssystem. Vor allem in der Hochfrequenztechnik wird der Balun auch als Symmetrierglied bezeichnet.

Gemäß einer weiteren vorteilhaften Ausführungsform der Erfindung ist die wenigstens eine elektrisch leitfähige Leitung in oder an dem Handschuh oder in oder an dem Tragriemen angeordnet. Gemäß einer anderen Ausführungsform ist die wenigstens eine elektrisch leitfähige Leitung in dem RFID-Schreib-/Lesegerät oder RFID-Lesegerät angeordnet.

Eine weitere vorteilhafte Ausführungsform der Erfindung sieht vor, dass das RFID-System wenigstens eine elektrisch leitfähige Leitung
- in oder auf wenigstens einem Finger des Handschuhs oder
- in oder auf einer Handflächenseite des Handschuhs oder des Tragriemens oder
- in oder auf einer Handrückenseite des Handschuhs oder des Tragriemens oder
- in oder auf einer Handseite des Handschuhs oder des Tragriemens oder
- in oder auf einer Fingerseite des Handschuhs oder
- im Bereich eines Handgelenkes des Handschuhs oder des Tragriemens
angeordnet ist.

Die wenigstens eine elektrisch leitfähige Leitung kann in den verschiedensten Bereichen des Handschuhs oder des Tragriemens angeordnet sein. Weist der Handschuh Finger auf, ist die wenigstens eine elektrisch leitfähige Leitung in oder auf wenigstens einem Finger des Handschuhs angeordnet. Weist der Handschuh keine Finger auf oder ist ein Tragriemen vorgesehen, kann die wenigstens eine elektrisch leitfähige Leitung in oder auf einer Handflächenseite, in oder auf einer Handrückenseite oder seitlich des Handschuhs oder des Tragriemens oder in oder auf einer Handseite angeordnet sein. Auch eine Anordnung im Bereich eines Handgelenkes des Handschuhs oder des Tragriemens ist möglich. Bei einem Handschuh mit Fingern kann die wenigstens eine elektrisch leitfähige Leitung auf der Fingerunterseite oder seitlich an den Fingern angeordnet sein.

Grundsätzlich ist auch eine Anordnung auf der Oberseite der Finger möglich. Das Signal des Transponders wird jedoch besser erfasst, wenn die wenigstens eine elektrisch leitfähige Leitung seitlich oder an der Fingerunterseite angeordnet ist.

Gemäß einer weiteren vorteilhaften Ausführungsform der Erfindung ist vorgesehen, dass in der wenigstens einen elektrisch leitfähigen Leitung wenigstens ein elektrisch leitfähiges, flächig ausgebildetes Element angeordnet ist, oder dass die wenigstens eine elektrisch leitfähige Leitung wenigstens teilweise flächig ausgebildet ist.

Durch diese Ausbildungsform wird der kapazitive Effekt vergrößert. So können beispielsweise am Ende oder im Verlauf der elektrisch leitfähigen Leitung metallische Plättchen vorgesehen sein, so dass metallische Flächen erzeugt werden. Es besteht aber auch die Möglichkeit, die elektrisch leitfähige Leitung selbst in Teilbereichen flächig auszubilden. Hierzu kann beispielsweise ein im Querschnitt runder Draht abgeflacht werden.

Gemäß einer besonders bevorzugten Ausführungsform der Erfindung ist vorgesehen, dass zwei elektrisch leitfähige Leitungen vorgesehen sind. Hierdurch ist eine RFID-Schreib-/Lesegerät oder RFID-Lesegerät verwendbar mit einem symmetrischen Antennenausgang. In diesem Fall kann auf die Symmetrierung eines unsymmetrischen Signales verzichtet werden.

Gemäß einer weiteren vorteilhaften Ausführungsform ist vorgesehen, dass die beiden elektrisch leitfähigen Leitungen gleich lang oder zumindest annähernd gleich lang ausgebildet sind.

Gemäß einer vorteilhaften Ausführungsform der Erfindung ist eine Länge der zwei elektrisch leitfähigen Leitungen um maximal 10 Millimeter voneinander abweichend ausgebildet. Hierdurch ist die Länge der zwei elektrischen Leitungen annähernd gleich. Ein Millimeter Längenabweichung entspricht 1,1° bei 900 MHz.

Eine weitere vorteilhafte Ausführungsform der Erfindung sieht vor, dass wenigstens zwei elektrisch leitfähige Leitungen vorgesehen sind und dass die elektrisch leitfähigen Leitungen in verschiedenen Fingern des Handschuhs angeordnet sind. Beispielsweise ist eine elektrisch leitfähige Leitung im Zeigefinger und eine zweite elektrisch leitfähige Leitung im Ringfinger des Handschuhs angeordnet. Es besteht jedoch auch die Möglichkeit, die beiden elektrisch leitfähigen Leitungen in anderen Fingern anzuordnen, beispielsweise im Daumen und im Mittelfinger oder im Daumen und im Ringfinger oder im Zeigefinger und im kleinen Finger.

Das RFID-Schreib-/Lesegerät oder RFID-Lesegerät ist vorteilhaft als UHF-RFID-Schreib-/Lesegerät oder RFID-Lesegerät ausgebildet. Ein UHF-RFID-Schreib-/Lesegerät oder RFID-Lesegerät ist ausreichend, um in einem Nahfeldbereich Transponder zu erfassen. Wie schon ausgeführt, liegt der reaktive Nahfeldbereich bei 0 Zentimetern bis 5,3 Zentimetern (0 bis λ/2*π*), der strahlende Nahfeldbereich liegt bei 5,3 Zentimetern bis 66 Zentimetern (λ/2*π* bis 2A). Im vorliegenden Fall liegt der Bereich, in dem die RFID-Schreib-/Lesegerät oder RFID-Lesegerät Transponder erfasst, bei vorzugsweise 3 bis 10 Zentimetern. Der Bereich kann sich jedoch auf bis zu 20 Zentimetern erstrecken.

Liegt ein Handschuh ohne Finger vor oder ein Tragriemen, so kann die wenigstens eine elektrisch leitfähige Leitung beispielsweise zu den Handflächen geführt werden.

Werden zwei elektrisch leitfähige Leitungen verwendet, kann ein weiterer Kopplungseffekt ausgenutzt werden, wenn die Leitungen nebeneinander verlaufend angeordnet sind.

Die Signalübergabe von dem RFID-Schreib-/Lesegerät oder RFID-Lesegerät zu dem Handschuh oder dem Tragriemen kann vorteilhaft über handelsübliche Druckknöpfe erfolgen. Es wird kein spezieller HF-Stecker benötigt.

Gemäß einer weiteren vorteilhaften Ausführungsform weist das RFID-Schreib-/Lesegerät oder das RFID-Lesegerät wenigstens einen Taster für die Betätigung und/oder Einstellung des RFID-Schreib-/Lesegerätes oder RFID-Lesegerät auf. Hierdurch kann das RFID-Schreib-/Lesegerät oder RFID-Lesegerät über den wenigstens einen Taster gesteuert werden. Es können beispielsweise Einstellungen an dem RFID-Schreib-/Lesegerät oder RFID-Lesegerät vorgenommen werden. Beispielsweise kann ein Betriebsmodus eingestellt werden, oder falls sich das Gerät bei längerer Nichtbenutzung automatisch abschaltet, der Zeitraum bis zum Abschalten. Es besteht auch die Möglichkeit, dass über den wenigstens einen Taster eine Bestätigungsanfrage quittiert wird.

Wie schon ausgeführt, sind, wenn zwei elektrisch leitfähige Leitungen vorgesehen sind, diese vorteilhaft ungefähr gleich lang. Die elektrisch leitfähigen Leitungen werden in diesem Fall 180° phasenverschoben angesprochen.

Gemäß einer weiteren vorteilhaften Ausführungsform der Erfindung ist vorgesehen, dass das RFID-Schreib-/Lesegerät oder RFID-Lesegerät eine Leistung bis zu 200 mW (Milliwatt) aufweist. Dadurch, dass das erfindungsgemäße RFID-System im Nahfeldbereich arbeitet und lediglich wenigstens eine elektrisch leitfähige Leitung vorgesehen ist, die als nicht angepasste elektrisch leitfähige Leitung ausgebildet ist, reicht eine derartig kleine Leistung der RFID-Schreib-/ Lesegerät oder RFID-Lesegerät aus.

Das erfindungsgemäße Verfahren zur Erfassung eines Zugriffs auf Ablagefächer und/oder Ablageorte für ein Lagersystem, das ein Entnehmen von Waren aus den Ablagefächern oder den Ablageorten oder ein Bestücken der Ablagefächer oder der Ablageorte mit Waren automatisch erfasst zeichnet sich dadurch aus,
- dass dem oder den Transpondern im Host-System ein Ablagefach oder ein Ablageort zugewiesen wird,
- dass die Vorrichtung zur Erfassung des Zugriffs auf die Ablagefächer und/oder die Ablageorte Transponderantworten des wenigstens einen Transponders erfasst,
- dass das RFID-Schreib-/Lesegerät oder das RFID-Lesegerät wenigstens einen RSSI-Wert (Received Signal Strength Indicator) der Transponderantworten erfasst und auswertet,
- dass das RFID-Schreib-/Lesegerät oder das RFID-Lesegerät den Transponder mit dem größten RSSI-Wert erfasst, und
- dass die Ware dem Ablagefach und/oder Ablageort des diesem zugeordneten Transponders zugeordnet wird.

Das erfindungsgemäße Verfahren weist den Vorteil auf, dass die Vorrichtung zur Erfassung des Zugriffs auf die Ablagefächer und/oder die Ablageorte mit wenigstens einem RFID-Schreib-/Lesegerät oder wenigstens einem RFID-Lesegerät, wobei jedes RFID-Schreib-/Lesegerät oder jede RFID-Lesegerät wenigstens eine Antenne aufweist, Transponderantworten des wenigstens einen Transponders erfasst, und dass das RFID-Schreib-/Lesegerät oder das RFID-Lesegerät wenigstens einen RSSI-Wert (Received Signal Strength Indicator) der Transponder Antworten erfasst und auswertet. Dadurch, dass das RFID-Schreib-/Lesegerät oder das RFID-Lesegerät den Transponder mit dem größten RSSI-Wert erfasst und dass die Ware dem Ablagefach und/oder dem Ablageort des diesem zugeordneten Transponders zugeordnet wird, wird ein nahezu fehlerfreies oder sogar fehlerfreies Zuordnen der Waren zum Ablagefach oder Ablageort möglich, da gemäß dem erfindungsgemäßen Verfahren der korrekte Transponder über die Erfassung des größten RSSI-Wertes erfasst wird.

Fehlerfassungen von Transpondern, die weiter weg liegen, beispielsweise in benachbarten Ablageorten oder Ablagefächern, werden über die Erfassung des größten RSSI-Wertes ausgeschlossen, so dass der korrekte Transponder erfasst wird.

Gemäß einer weiteren vorteilhaften Ausführungsform der Erfindung ist vorgesehen, dass sämtliche Transponder im Erfassungsbereich des RFID-Schreib-/Lesegerätes oder des RFID-Lesegerätes gelesen und der RSSI-Wert bestimmt wird.

Hierdurch kann bestimmt werden, welcher Transponder den größten RSSI-Wert aufweist. Durch diese Bestimmung kann die Ware dem Ablagefach oder Ablageort mit dem Transponder mit dem größten RSSI-Wert zugeordnet werden.

Gemäß einer weiteren vorteilhaften Ausführungsform der Erfindung ist vorgesehen, dass die Signale der Transponderantworten getrennt werden. Erhält das RFID-Schreib-/Lesegerät oder das RFID-Lesegerät von mehreren Transpondern Antworten, beispielsweise von zwei Transpondern benachbarter Ablagefächer in einem Regal, müssen diese Signale getrennt werden, so dass das RFID-Schreib-/Lesegerät oder das RFID-Lesegerät erkennt, von welchem Transponder das Signal kommt. Es wird das Signal von dem Transponder verwendet, welcher das stärkste Signal sendet, da davon auszugehen ist, dass es sich um den Transponder handelt, der an dem Ablageort oder Ablagefach angeordnet ist, in das die Ware eingebracht oder aus dem die Ware entnommen wird.

Gemäß der Erfindung ist vorgesehen, dass das RFID-Schreib-/Lesegerät oder das RFID-Lesegerät Amplituden der Antwortsignale der Transponder detektiert.

Gemäß dem erfindungsgemäßen Verfahren ist vorgesehen, dass dem oder den Transpondern im Host-System ein Ablagefach oder ein Ablageort zugewiesen wird. Hierdurch ist es möglich, in einer Zentraleinheit eine Zuordnung vorzunehmen, so dass das Bestücken von Ablageorten oder Ablagefächern mit Waren oder das Entnehmen von Waren zentral erfasst wird. Darüber hinaus kann vorteilhaft auch das Identifizieren der Waren mit dem oder den RFID-Schreib-/Lesegeräten oder dem oder den RFID-Lesegeräten im Host-System erfasst werden.

Das erfindungsgemäße Lagersystem und das erfindungsgemäße Verfahren können im Bereich der Distribution, Lagerhaltung und dergleichen angewendet werden. Ablagefächer können beispielsweise in Regalen vorgesehen sein. Ablageorte können beispielsweise Orte für Säcke oder dergleichen sein. Grundsätzlich besteht die Möglichkeit, in einem Ablagefach oder an einem Ablageort einen Transponder vorzusehen. In diesem Fall ist es vorteilhaft, wenn das RFID-Schreib-/Lesegerät oder das RFID-Lesegerät wenigstens zwei Antennen aufweist, die zueinander orthogonale Abstrahlrichtungen aufweisen. In diesem Fall erfasst wenigstens eine Antenne den Transponder. Ist der Transponder nämlich senkrecht zur Abstrahlrichtung einer RFID-Antenne angeordnet, wird dieser nicht erfasst.

Gemäß einer vorteilhaften Ausführungsform kann das RFID-Schreib-/Lesegerät oder RFID-Lesegerät mit einem Lagesensor gekoppelt sein, so dass die Lage der RFID-Antenne erkannt wird und die passende RFID-Antenne aktiv geschaltet wird.

Es kann in dem RFID-Schreib-/Lesegerät oder RFID-Lesegerät jedoch auch lediglich eine Antenne vorgesehen sein. In diesem Fall ist es vorteilhaft, wenn pro Ablagefach oder Ablageort wenigstens zwei Transponder vorgesehen sind, deren Polarisationsebenen orthogonal zueinander ausgerichtet sind. Grundsätzlich besteht auch die Möglichkeit, mehrere Transponder pro Ablagefach oder Ablageort vorzusehen und mehrere Antennen in dem RFID-Schreib-/Lesegerät oder RFID-Lesegerät. Auch die Kombination mit dem Lagesensor ist möglich. Es ist auch möglich, bei dem Vorsehen mehrerer Antennen in dem RFID-Schreib-/Lesegerät oder dem RFID-Lesegerät einen Umschalter zum Aktivschalten der verschiedenen Antennen vorzusehen.

Weitere Merkmale und Vorteile der Erfindung ergeben sich anhand der zugehörigen Zeichnungen, in denen verschiedene Ausführungsformen des erfindungsgemäßen Lagersystems nur beispielhaft dargestellt sind, ohne die Erfindung auf diese Ausführungsbeispiele zu beschränken. In den Zeichnungen zeigen:
- Fig. 1: ein Regal mit Ablagefächern in Frontansicht;
- Fig. 2: einen Tragriemen für ein RFID-Lesegerät angeordnet an einer Hand in Blickrichtung Handrücken;
- Fig. 3: einen Tragriemen für ein RFID-Lesegerät angeordnet an einer Hand mit Blickrichtung auf die Handfläche;
- Fig. 4: einen Arbeitshandschuh mit einem RFID-Lesegerät;
- Fig. 5: einen Tragriemen in Draufsicht, nicht an einer Hand angeordnet;
- Fig. 6: ein Regal in perspektivischer Ansicht;
- Fig. 7: eine Halterung für ein RFID-Lesegerät im Querschnitt;
- Fig. 8: einen Querschnitt durch einen Teil eines RFID-Lesegerätes mit Druckknopf;
- Fig. 9: einen Teil des Druckknopfes gemäß Fig. 8 in Seitenansicht;
- Fig. 10: einen Stoffschalter im Querschnitt;
- Fig. 11: eine Darstellung der Verbindung vom Stoffschalter bis zu den Druckknöpfen in Draufsicht;
- Fig. 12: eine Verbindung mit elektrisch leitfähiger Litze in Draufsicht;
- Fig. 13: eine Verbindungsleitung mit mäanderförmig angeordneter elektrischer Leitung in Draufsicht;
- Fig. 14: eine Verbindungsleitung mit zickzackförmig angeordneter elektrischer Leitung in Draufsicht;
- Fig. 15: einen Arbeitshandschuh mit einem RFID-Lesegerät und einer Nahfeldkoppeleinheit auf einem Handrücken;
- Fig. 16: einen Arbeitshandschuh mit einem RFID-Lesegerät und einer Nahfeldkoppeleinheit auf dem Handrücken, dargestellt mit einem Transponder mit kapazitiver Kopplung;
- Fig. 17: einen Arbeitshandschuh mit einem RFID-Lesegerät und einer Nahfeldkoppeleinheit auf dem Handrücken mit einem Transponder mit einer Leitungskopplung;
- Fig. 18: einen Arbeitshandschuh mit einem RFID-Lesegerät und einer Nahfeldkoppeleinheit auf dem Handrücken mit einer Leitungskopplung in Draufsicht auf den Handschuh und in unterer Ansicht auf den Handschuh;
- Fig. 19: eine schematische Darstellung eines RFID-Lesegerätes mit asymmetrischem Ausgang;
- Fig. 20: eine schematische Darstellung eines RFID-Lesegerätes mit symmetrischem Ausgang;
- Fig. 21: eine schematische Darstellung von Feldstärken der Drähte 204, 205;
- Fig. 22: eine elektrisch leitfähige Verbindungsleitung mit metallischen Flächen.

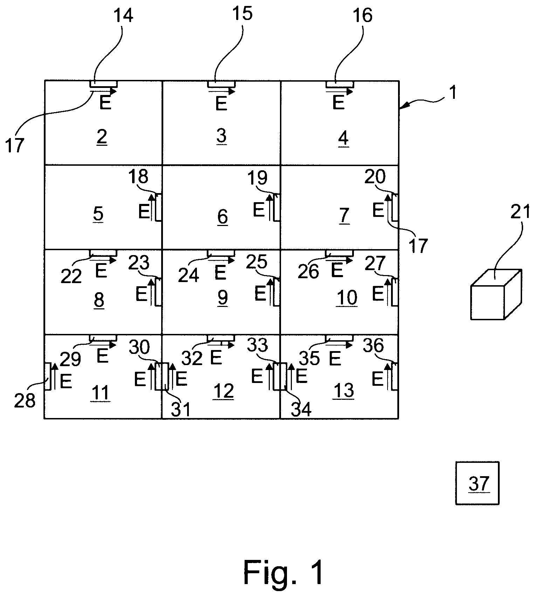

Fig. 1 zeigt ein Regal 1 mit Ablagefächern 2 - 13.

In der obersten Reihe der Ablagefächer 2, 3, 4 sind Transponder 14, 15, 16 jeweils an Decken der Regalfächer 2, 3, 4 angeordnet. Die Transponder weisen eine Polarisationsebene (E) auf, die mit 17 gekennzeichnet sind.

Wird eine Ware 21 in einem der Fächer 2, 3, 4 abgelegt, wird über ein RFID-Schreib-/Lesegerät oder RFID-Lesegerät (in Fig. 1 nicht dargestellt) der dem entsprechenden Ablagefach 2, 3, 4 zugeordnete Transponder 14, 15, 16 ausgelesen. Das RFID-Schreib-/Lesegerät oder das RFID-Lesegerät ist an einem Handschuh oder einem Tragriemen einer Bedienperson angeordnet, wie in den folgenden Figuren noch erläutert wird.

Wird die Ware 21 im Fach 2 abgelegt, können auch Transponderantworten benachbarter Transponder erfasst werden, zumindest Transponderantworten des Transponders 15, eventuell sogar des Transponders 16. Um die Ware 21 genau dem Regalfach 2 zuordnen zu können, erfasst das RFID-Schreib-/Lesegerät oder das RFID-Lesegerät wenigstens einen RSSI-Wert (Received Signal Strength Indicator) der empfangenen Transponderantworten und wertet diese aus. Befindet sich das RFID-Lesegerät in dem Fach 2, ist der RSSI-Wert des Transponders 14 am größten und die Ware 21 wird dem Fach 2 zugeordnet.

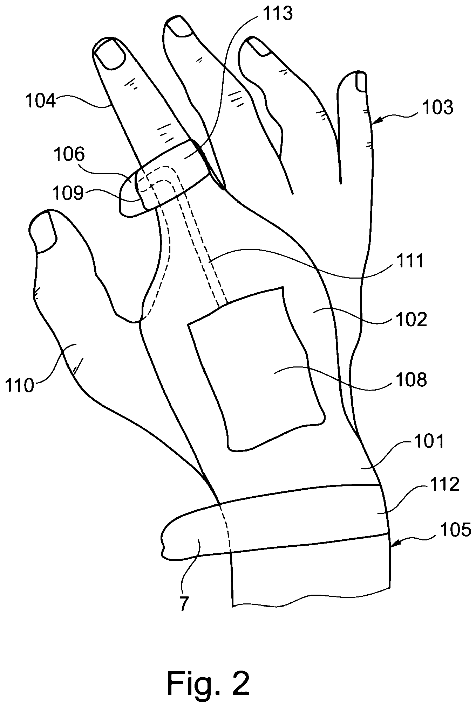

Fig. 2 zeigt eine Vorrichtung 101, die als Tragriemen 102 ausgebildet ist und an einer Hand 103 eines Trägers angeordnet ist. Der Tragriemen 102 ist im Bereich eines Zeigefingers 104 an der Hand 103 lösbar befestigt. Ebenso ist der Tragriemen 102 im Bereich eines Unterarmes oder Handgelenkes 105 befestigt. Der Tragriemen 102 weist hierzu Verschlüsse 106, 107, die beispielsweise als Klettverschlüsse ausgebildet sind, auf. Auf dem Tragriemen 102 ist ein RFID-Lesegerät 108 angeordnet.

Das RFID-Lesegerät 108 kommuniziert mit den Transpondern 14, 15, 16, die gemäß Fig. 1 im Regal 1 in der beschriebenen Art und Weise angeordnet sind.

Um einen Erfassungsvorgang zu starten, ist an dem Tragriemen 102 im Bereich des Zeigefingers 104 ein Schalter angeordnet. Der Schalter 109 ist derart an dem Tragriemen 102 im Bereich des Zeigefingers 104 angeordnet, dass er mit einem Daumen 110 durch Drücken betätigt werden kann. Von dem Schalter 109 führt eine elektrische Verbindungsleitung 111 zu dem RFID-Lesegerät 108. Der Tragriemen 102 ist überwiegend aus Stoff gebildet. Lediglich die Verschlüsse 106, 107 sind als Klettverschlüsse mit einem Flausch- und einem gegenüberliegend angeordneten Hakenband ausgebildet. Die Verbindungsleitung 111 ist ebenfalls aus Stoff gebildet und in dem Stoff sind elektrisch leitfähige Materialien angeordnet.

Das RFID-Lesegerät 108 ist ebenfalls in einer Stofftasche, die noch näher beschrieben wird, angeordnet.

Die Vorrichtung wird für die Bestückung des Regales 1 oder das Entnehmen von Waren 21 aus dem Regal 1 an der Hand 103 angeordnet. Die Transponder 14, 15, 16 können mit dem RFID-Lesegerät 108 erfasst werden.

Das RFID-Lesegerät 108 kann von dem Tragriemen 102 entfernt werden. Der Tragriemen 102 kann dann gewaschen oder gereinigt werden. Der Tragriemen 102 weist darüber hinaus den Vorteil auf, dass sämtliche Teile wie der Schalter 109, der als Stoffschalter ausgebildet ist, die Verbindungsleitung 111, die ebenfalls aus Stoff gebildet ist, und die Halterung für das RFID-Lesegerät 108, die ebenfalls aus Stoff gebildet ist, vollständig aus Stoff gebildet sind und sämtliche Verbindungen durch einen oder mehrere Nähvorgänge hergestellt werden können.

Der Tragriemen 102 wird mit einer Schlaufe 112 am Handgelenk oder Unterarm 105 angeordnet und mit dem Verschluss 107 größenverstellbar, das heißt angepasst an die Trägerperson verschlossen. Darüber hinaus ist der Tragriemen mit einer Schlaufe 113 am Zeigefinger befestigt. Auch diese Schlaufe 113 ist größenverstellbar durch den Verschluss 106 an die Trägerperson anpassbar.

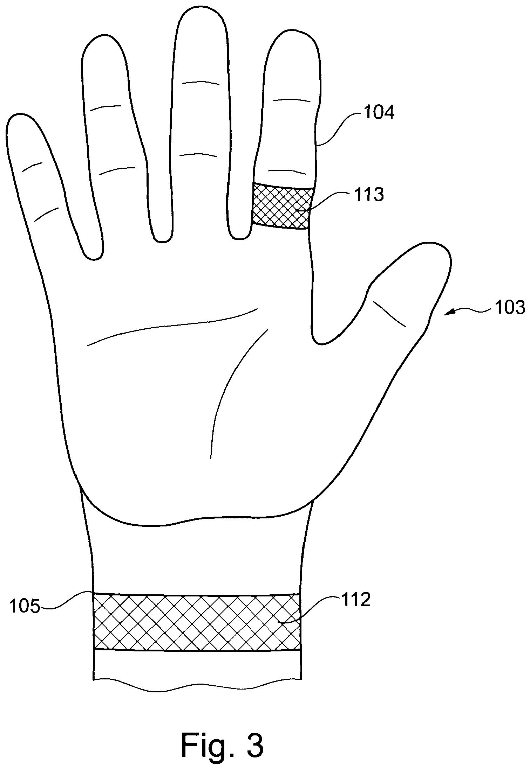

Gemäß Fig. 3 ist die Hand 103 in Ansicht in Richtung Handfläche dargestellt. Die Schlaufen 112, 113 des Tragriemens 102 umschließen den Unterarm oder das Handgelenk 105 ebenso den Zeigefinger 104.

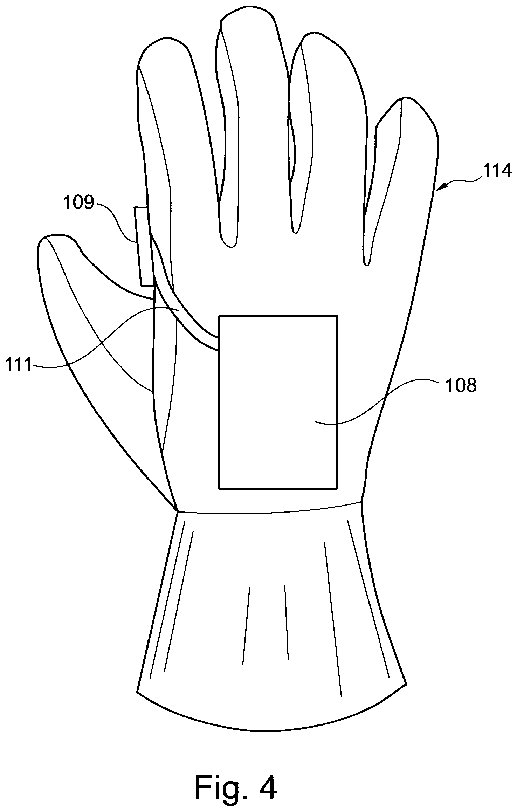

Fig. 4 zeigt ein geändertes Ausführungsbeispiel mit einem Arbeitshandschuh 114. Auf dem Arbeitshandschuh 114 ist das RFID-Lesegerät 108 vorzugsweise in einer Stofftasche (in Fig. 4 nicht dargestellt) angeordnet. Der Arbeitshandschuh 108 weist ebenfalls den Schalter 109, der vorteilhaft als Stoffschalter ausgebildet ist, auf sowie die Verbindungsleitung 111, die ebenfalls aus Stoff besteht mit in dem Stoff integriertem elektrisch leitfähigen Material.

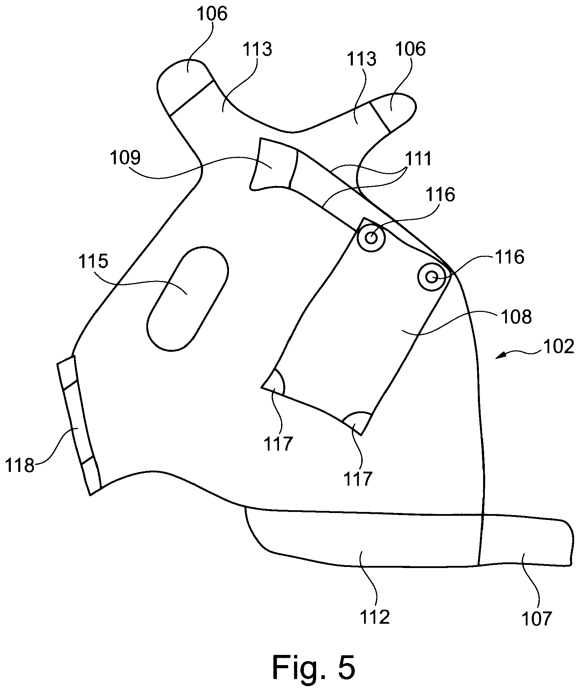

Fig. 5 zeigt den Tragriemen 102 mit der Schlaufe 112 und dem Verschluss 107, die im Bereich des Handgelenkes/Unterarmes 105 anordbar sind. Darüber hinaus ist die Schlaufe 113 mit dem Verschluss 106 dargestellt. Die Schlaufe 113 umschließt den Zeigefinger, wie in Fig. 2 dargestellt.

In der in Fig. 5 dargestellten Ausführungsform ist eine Öffnung 115 für den Daumen 110 (in Fig. 5 nicht dargestellt) vorgesehen. Durch diese Ausführungsform gemäß Fig. 5 erhält der Tragriemen 102 einen besseren und festeren Sitz an der Hand 103.

Mit der in den Fig. 2 bis 5 beschriebenen Vorrichtung 102, 114 und dem an der Vorrichtung 102, 114 angeordneten RFID-Lesegerät 108 kann eine Trägerperson die Ware 21, die in Fig. 1 dargestellt sind, in eines der Fächer 2 - 13 des Regales 1 legen oder diese Ware 21 aus einem der Ablagefächer 2 - 13 entnehmen und es erfolgt eine Zuordnung der Ware 21 zu dem entsprechenden Regalfach 2 - 13.

Die Funktionsweise in Bezug auf die oberste Regalfachreihe mit den Ablagefächern 2, 3 und 4 wurde schon beschrieben.

Gemäß einer anderen Ausführungsform sind in den Regalfächern 5, 6, 7 die Transponder 18, 19, 20 angeordnet, und zwar jeweils an einer Seitenwand der Regalfächer 5, 6 und 7. Wird die Vorrichtung 102, 114, das heißt der Arbeitshandschuh oder der Tragriemen mit dem RFID-Lesegerät 108 an der rechten Hand getragen wird, kommunizieren die Transponder 18, 19, 20 mit dem RFID-Lesegerät 108. Die Polarisationsebene 17 der Transponder 18, 19, 20 ist in Fig. 1 ebenfalls eingezeichnet. Erfasst das RFID-Lesegerät 108 beim Ablegen der Ware 21 in dem Regelfach 6 auch die Transponder 20 und 16 zum Beispiel, wird über die Erfassung und Auswertung des RSSI-Wertes der Transponder 19 bestimmt, der den größten RSSI-Wert aufweist, so dass die Ware 21 genau dem Ablagefach 6 zugeordnet werden kann.

Im Fall der Anordnung der Transponder 18, 19, 20 an den seitlichen Wänden in den Ablagefächern 5, 6 und 7 werden die Transponder 18, 19, 20 nicht erfasst, wenn das RFID-Lesegerät 108 lediglich eine Antenne aufweist und die Polarisationsebene 17 der Transponder 18, 19, 20 senkrecht zu der Antennenausrichtung ausgerichtet ist.

In diesem Fall ist es erforderlich, dass in dem RFID-Lesegerät 108 zwei Antennen angeordnet sind, die senkrecht zueinander ausgerichtet sind. In diesem Fall spielt es keine Rolle, ob das RFID-Lesegerät vertikal oder horizontal in die Fächer 2 - 7 eingeführt wird.

Um ein RFID-Lesegerät mit lediglich einer Antenne vorzusehen, besteht auch die Möglichkeit, in den Ablagefächern 8, 9, 10 jeweils zwei Transponder anzuordnen. In den Ablagefächern 8, 9, 10 sind Transponder 22, 23; 24, 25; 26, 27 angeordnet. Da die Polarisationsebenen 17 dieser Transponder 22, 23; 24, 25; 26, 27 jeweils senkrecht zueinander ausgerichtet sind, spielt es keine Rolle, in welcher Ausrichtung das RFID-Lesegerät 108 in die Regalfächer 8, 9, 10 eingeführt wird.

In den Regalfächern 11, 12, 13 sind in jedem Regelfach drei Transponder angeordnet, nämlich die Transponder 28 - 36. In diesem Fall besteht die Möglichkeit, dass ein RFID-Lesegerät 108 auf jeden Fall von einem der Transponder 28, 29, 30; 31, 32, 33; 34, 35, 36 erkannt wird unabhängig davon, ob ein Rechtshänder oder ein Linkshänder das RFID-Lesegerät 108 an der rechten Hand oder der linken Hand trägt.

In jedem Fall wird, wenn das RFID-Lesegerät 108 in eines der Regalfächer 2 - 13 eingeführt wird, um eine Ware 21 dort abzulegen oder zu entnehmen, das Verfahren durchgeführt, dass wenigstens ein RSSI-Wert der Transponderantworten erfasst und von dem RFID-Lesegerät 108 ausgewertet wird, so dass der Transponder ermittelt wird, der dem Fach eindeutig zuzuordnen ist, in dem die Ware 21 abgelegt oder aus dem Ware 21 entnommen wird.

Grundsätzlich besteht auch die Möglichkeit, zusätzlich die Anzahl der Transponderantworten auszulesen. Wird beispielweise die Ware 21 im Fach 9 abgelegt, so werden die Transponderantworten der Transponder 24, 25 erfasst, wie beispielsweise auch die Transponderantworten der Transponder 26, 27. Sobald sich das RFID-Lesegerät 108 in dem Regelfach 9 befindet, erfolgt eine Abschirmung durch die Regalwand zwischen dem Fach 9 und dem Fach 10, so dass die Anzahl der Transponderantworten von dem Transponder 26 geringer ist als von den Transpondern 24 und 25.

Grundsätzlich erfasst das RFID-Lesegerät 108 sämtliche im Erfassungsbereich empfangene Transponderantworten. Je nach Reichweite erfasst das RFID-Lesegerät 108 die Transponderantworten von Transpondern in benachbarten Fächern, unter Umständen jedoch auch in weiter entfernt liegenden Fächern. Diese Transponderantworten werden von dem RFID-Lesegerät 108 getrennt, um die einzelnen Transponderantworten auswerten zu können.

Das RFID-Lesegerät 108 steht mit einem Host-System 37 beispielsweise über eine Funkverbindung in Verbindung. Über das Host-System 37 erfolgt die Auswertung, in welchem Ablagefach 2 - 13 eine Ware 21 abgelegt oder aus diesem entnommen wird.

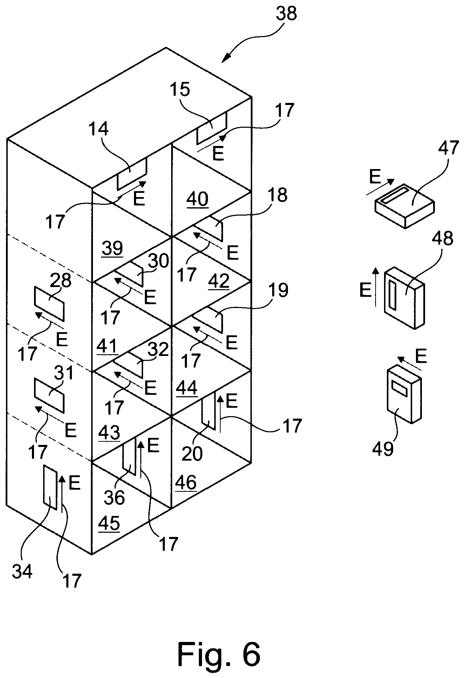

Fig. 6 zeigt ein Regal 38 mit Regalfächern 39 - 46. In den Regalfächern 39, 40 sind Transponder 14, 15 angeordnet mit einer ersten Ausrichtung der Polarisationsebenen (E) 17. Diese Transponder 14, 15 werden von dem RFID-Lesegerät 47 erfasst, da die Antennenausrichtung (E) des RFID-Lesegerätes 47 mit der Polarisationsebene (E) 17 der Transponder 14, 15 übereinstimmt. Die Transponderantworten der Transponder 14, 15 werden von dem RFID-Lesegerät 47 erfasst. Wird das RFID-Lesegerät 47 in das Regalfach 39 eingebracht, werden nicht nur die Transponderantworten des Transponders 14 erfasst, sondern auch des Transponders 15. Durch die Auswertung des RSSI-Wertes der Transponderantworten der Transponder 14, 15 kann ermittelt werden, dass das RFID-Lesegerät 47 sich in dem Fach 39 befindet und nicht in dem Fach 40.

Die Transponder 28, 30, 18, 31, 32, 19 sind in den Regalfächern 41 - 46 an den Seitenwänden der Regalfächer 41 - 46 angeordnet. In den Regalfächern 41 - 46 sind Transponder jeweils an beiden Seitenflächen der Regalfächer 41 - 46 angeordnet. In der perspektivischen Darstellung der Fig. 6 sind nicht sämtliche Transponder dargestellt.

Das RFID-Lesegerät 48 erfasst die Transponderantworten der Transponder 34, 36, 20 der Regalfächer 45, 46. Das RFID-Lesegerät 49 erfasst die Transponderantworten der Transponder 28, 30, 18, 31, 32, 19 der Regalfächer 41 - 44. Das heißt, dass die Ausrichtung der Antennen der RFID-Lesegeräte 47, 48, 49 dieselbe Ausrichtung aufweisen müssen wie die Polarisationsebenen 17 (E) der Transponder 14, 15, 34, 36, 20, 28, 30, 18, 31, 32, 19.

Gemäß der Erfindung werden die RSSI-Werte der Transponderantworten erfasst, so dass hierdurch bestimmt werden kann, in welchem Regalfach 39 - 46 sich die RFID-Lesegeräte 47, 48, 49 gerade befinden.

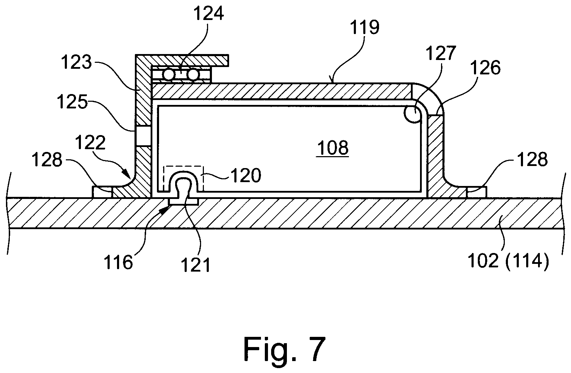

Wie in Fig. 7 dargestellt, ist an dem Tragriemen 102 das RFID-Lesegerät 108 angeordnet, welches in einer Stofftasche eingeschoben ist. Von dem RFID-Lesegerät 108 führen textile, flexible, elektrische Verbindungsleitungen 111 zu dem Schalter 109, der ebenfalls als Stoffschalter oder als Stofftaster ausgebildet ist. Die Verbindungsleitungen 111 führen zu Druckknöpfen 116 und stehen mit diesen in elektrischer Verbindung. Erste Teile der Druckknöpfe 116 sind zum einen in dem Tragriemen 102 angeordnet. Die Gegenstücke, das heißt die zweiten Teile der Druckknöpfe 116 sind in dem RFID-Lesegerät 108 angeordnet. Durch das Zusammenführen der Druckknöpfe 116 wird der elektrische Kontakt zwischen dem RFID-Lesegerät 108 und den elektrisch leitfähigen Verbindungsleitungen 111 zu dem Schalter 109 hergestellt. In der noch näher zu beschreibenden Stofftasche sind Aussparungen 117 für beispielsweise LEDs oder Taster des RFID-Lesegerätes 108 vorgesehen.

Der Tragriemen 102 weist darüber hinaus eine Lasche 118 auf.

Fig. 7 zeigt den Tragriemen 102 oder den Arbeitshandschuh 114. Auf dem Tragriemen 102 oder Arbeitshandschuh 114 ist eine Stofftasche 119 angeordnet. In der Stofftasche 119 ist das RFID-Lesegerät 108 angeordnet. Das RFID-Lesegerät 108 weist einen ersten Teil 120 (weiblich) eines Druccknopfes 116 auf. In dem Tragriemen 102 oder dem Arbeitshandschuh 114 ist ein zweiter Teil 121 (männlich) des Druckknopfes 116, das heißt das Gegenstück zu dem ersten Teil 120 (weiblich) vorgesehen. Die beiden Teile 120, 121 des Druckknopfes 116 sind in Kontakt gebracht, so dass das RFID-Lesegerät 108 zum einen über den Druckknopf 116 und zum anderen in der Stofftasche 119 an dem Tragriemen oder dem Arbeitshandschuh fixiert wird. Die Stofftasche 119 umschließt das RFID-Lesegerät 108 bis auf eine Vorderseite 122. In diesem Bereich ist eine Lasche 123 vorgesehen, die ebenfalls mit einem Verschluss, der beispielsweise als Klettverschluss 124 ausgebildet ist, verschlossen werden kann. In der Lasche 123 ist ein Schlitz 125 vorgesehen. Weist das RFID-Lesegerät zusätzlich einen Barcodeleser auf, kann durch den Schlitz 125 ein Barcode an der Ware 21 gescannt werden.

In der Stofftasche 119 ist darüber hinaus eine Öffnung 126 vorgesehen. Die Öffnung 126 korrespondiert mit einer LED 127 des RFID-Lesegerätes 108, so dass die LED 127 von außen erkennbar ist. Es kann im Bereich der Öffnung 126 auch ein Schalter (nicht dargestellt) in dem RFID-Lesegerät 108 angeordnet sein.

Die Stofftasche 119 wie auch die Lasche 123 sind mittels Nähten 128 an dem Tragriemen 102 oder dem Arbeitshandschuh 114 befestigt.

Der zweite Teil 121 (männlicher Teil) des Druckknopfes 116 kann in dem Tragriemen 102 oder dem Arbeitshandschuh 114 eingepresst sein. Es können Druckknöpfe 116 mit Zackenring verwendet werden, die mit dem elektrisch leitfähigen Material (in Fig. 7 nicht dargestellt) in der Verbindungsleitung 111 in einfacher Art und Weise verbunden werden können.

Wie in Fig. 7 zu erkennen ist, ist der erste Teil 120 (weiblicher Teil) des Druckknopfes 116 in dem RFID-Lesegerät 108 versenkt angeordnet. Hierdurch wird die Gesamthöhe des RFID-Lesegerätes 108 reduziert. Darüber hinaus ist noch eine zusätzliche Führung für den zweiten Teil 121 (männlicher Teil) des Druckknopfes 116 gegeben.

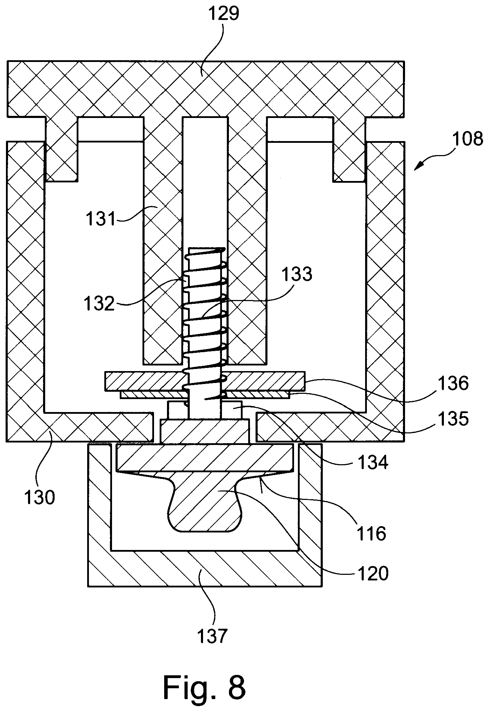

Gemäß Fig. 8 ist das RFID-Lesegerät 108 dargestellt, welches eine obere Gehäuseschale 129 und eine untere Gehäuseschale 130 aufweist. Die obere Gehäuseschale 129 weist einen Zapfen 130 mit einem Innengewinde 131 auf. In das Innengewinde 131 greift eine Schraube 133, die durch den ersten Teil 120 des Druckknopfes 116 greift. Darüber hinaus ist eine Federscheibe 134 vorgesehen sowie eine Kontaktfläche 135 einer Leiterplatte 136. Über den ersten Teil 120 des Druckknopfes 116 kann damit zum einen eine elektrisch leitfähige Verbindung zu der Leiterplatte 136 hergestellt werden. Zum anderen greift die Schraube 133 in das Innengewinde 132 des Zapfens 131 der oberen Gehäuseschale 129, so dass die obere Gehäuseschale 129 und die untere Gehäuseschale 130 des RFID-Lesegerätes 108 lösbar fest miteinander verbunden werden. Die Schraube 133 kann mittels eines Werkzeuges, beispielsweise eines Steckschlüssels 137 betätigt werden.

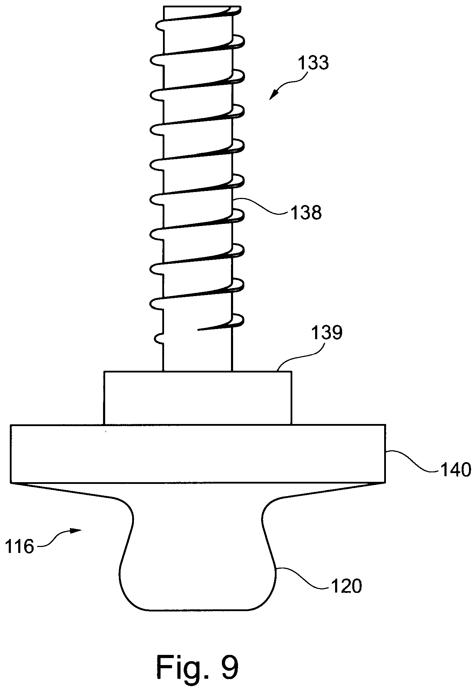

Fig. 9 zeigt die Schraube 133 mit einem Gewinde 138. Die Schraube 133 weist ebenfalls eine Kontaktfläche 139 auf, um einen elektrischen Kontakt mit der Kontaktfläche 135 der Leiterplatte 136 herzustellen. Darüber hinaus ist ein Werkzeugansatz 140 vorgesehen, um die Schraube 133 mit einem Werkzeug 137 betätigen zu können. Darüber hinaus ist ein erster Teil des Druckknopfes 116 an der Schraube 133 angeordnet.

Wie den Fig. 7, 8 und 9 zu entnehmen ist, können die ersten und zweiten Teile 120, 121 (weiblicher und männlicher Teil) des Druckknopfes 116 beliebig an dem RFID-Lesegerät 108 und dem Arbeitshandschuh 114 oder dem Tragriemen 102 angeordnet sein.

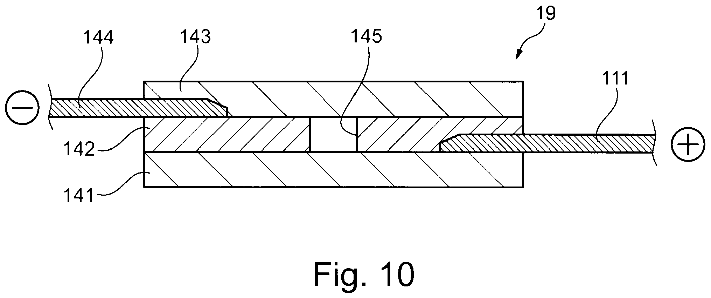

Fig. 10 zeigt den Schalter 9, der aus mehreren Lagen 141 - 143 besteht. Die Lage 141 stellt eine erste textile Elektrode mit angenähter Verbindungsleitung 111 dar. Die Schicht 143 stellt eine zweite textile Elektrode mit angenähter Verbindungsleitung 144 dar. Die Schicht 142 ist eine Pufferschicht, die einen Ausschnitt 145 aufweist. Wird auf den textilen Schalter 109 ein Druck ausgeübt, gelangen die Schichten 141, 143 in Kontakt und es wird eine elektrische Verbindung hergestellt.

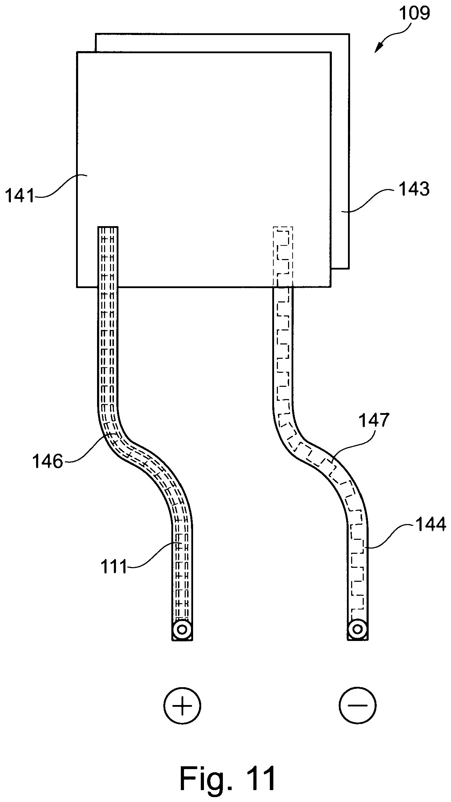

Fig. 11 stellt den Stoffschalter 109 noch einmal dar mit den angenähten Verbindungsleitungen 111 und 144 sowie den Elektroden 141 und 143. Die Zwischenschicht 142 ist in Fig. 11 nicht mehr dargestellt. Die Verbindungsleitungen 111, 144 sind beispielhaft dargestellt mit den in den Verbindungsleitungen 111, 144, die aus Stoff bestehen, angeordneten elektrischen Leitungen. In der Verbindungsleitung 111 ist die elektrische Leitung 146 mäanderförmig angeordnet. In der Verbindungsleitung 144 ist die elektrische Leitung beispielhaft als Geflecht, bestehend aus Litzen, ausgebildet.

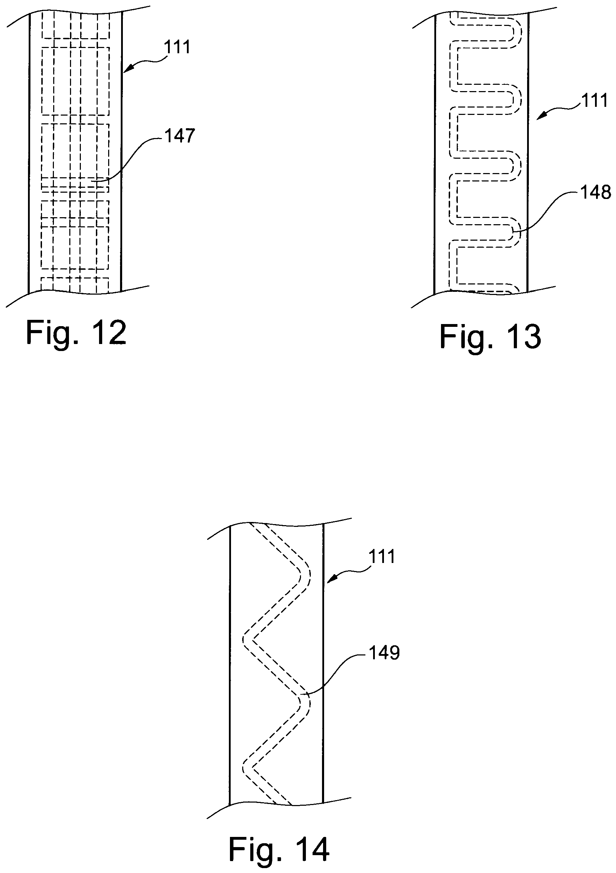

Weitere Beispiele für die Anordnung von elektrischen Leitungen in den Verbindungsleitungen 111 sind in den Fig. 12 bis 14 dargestellt.

In Fig. 12 ist noch einmal die Anordnung als Geflecht 147 mit Litzen dargestellt.

In Fig. 13 ist eine elektrische Leitung 148 mäanderförmig in der Verbindungsleitung 111 angeordnet.

Gemäß Fig. 14 ist eine elektrische Leitung 149 in der Verbindungsleitung 11 zickzackförmig angeordnet.

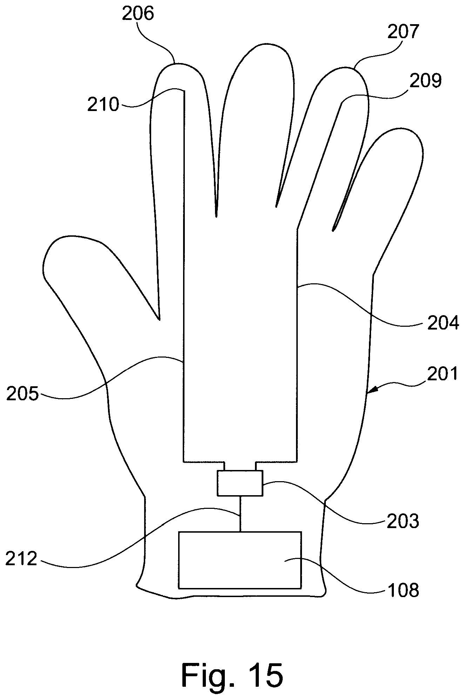

Fig. 15 zeigt einen Arbeitshandschuh 201, an dem ein RFID-Schreib-/Lesegerät oder das RFID-Lesegerät 108 lösbar angeordnet ist. Bei dem in Fig. 15 dargestellten RFID-Gerät 108 handelt es sich um ein RFID-Schreib-/Lesegerät oder RFID-Lesegerät mit einem unsymmetrischen Ausgang. Aus diesem Grunde ist zur Symmetrierung des Signales ein Balun 203 vorgesehen. Darüber hinaus sind in dem Handschuh 2 zwei Drähte 204, 205 angeordnet, die vorteilhaft in den Handschuh 201 eingenäht oder eingewebt sind. Die Drähte führen in einen Zeigefinger 206 und einen Ringfinger 207. Die Drähte 204, 205 können jedoch auch an anderen Fingern des Handschuhs 201 angeordnet sein.

Dieser Arbeitshandschuh 201 dient dazu, dass zum einen mit dem RFID-Lesegerät 108 die Transponder 14, 15, 16, 18, 19, 20, 22 - 27, 28 - 36 des Regales 1 ausgelesen werden. Die Drähte 204, 205 sind in dem Handschuh 202 angeordnet, um zusätzlich Transponder, die an der Ware 21 angeordnet sind, zu erfassen und hierüber die Ware 21 zu identifizieren.

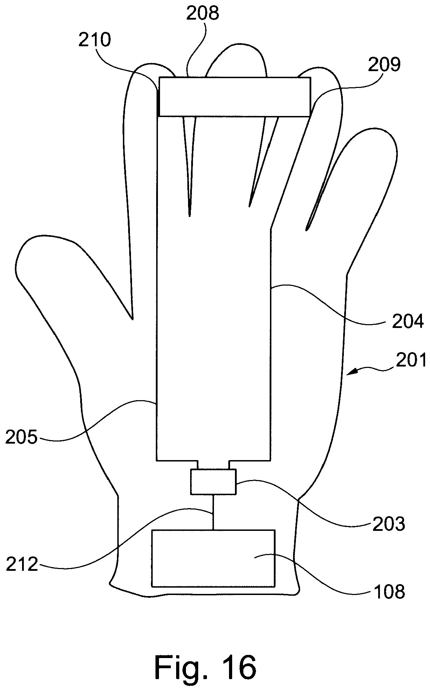

Gemäß Fig. 16 ist der Handschuh 201 dargestellt mit dem RFID-Lesegerät 108, dem Balun 203 und den Drähten 204, 205. Zusätzlich ist ein Transponder 208 dargestellt. In dem in Fig. 16 dargestellten Fall liegt eine kapazitive Kopplung vor. Für die kapazitive Kopplung werden die zwei Leitungen 204, 205 mit einem differentiellen Signal angesteuert (HF-Trägersignal). Die Leitungen 204, 205 sind gleich lang, so dass beide Reflexionsstellen an Enden 209, 210 der elektrisch leitfähigen Leitungen 204, 205 elektrisch gleich weit von der differentiellen Quelle entfernt sind. An den Enden 209, 210 bildet sich das maximale elektrische Feld aus. Hierdurch kann das Signal des Transponders 208 erfasst werden und der Transponder 208 kann ausgelesen werden, so dass die Informationen des Transponders 208 von dem RFID-Lesegerät 202 erfasst werden können. Gleichzeitig wird der Transponder 208 mit Energie versorgt, damit der Transponder auch bei weiteren Auslesevorgängen mit einem RFID-Schreib-/Lesegerät oder RFID-Lesegerät kommunizieren kann.

Der Transponder 208 ist vorteilhaft unmittelbar an einer Ware (nicht dargestellt), einem Paket, einer Transportkiste oder dergleichen (nicht dargestellt) angeordnet. Der Handschuh 201 wird mit den Enden 209, 210 der Leitungen 204, 205 in unmittelbare Nähe des Transponders 208 gebracht, so dass der Transponder 208 im Nahfeld ausgelesen werden kann.

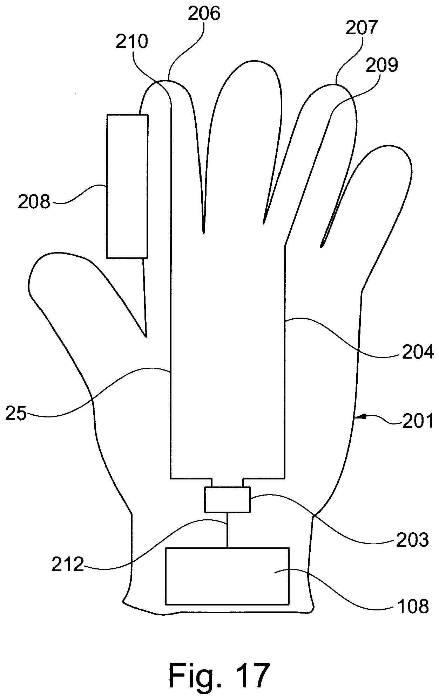

Fig. 17 zeigt ein Ausführungsbeispiel mit einer Leitungskopplung. Bei der in Fig. 17 dargestellten Leitungskopplung sind die elektrisch leitfähigen Leitungen 204, 205 idealerweise parallel oder annähernd parallel angeordnet. Es besteht jedoch auch die Möglichkeit, dass die elektrisch leitfähigen Leitungen 204, 205 in gleicher oder ähnlicher Richtung ausgerichtet sind. Gleiche Richtung bedeutet, dass die Leitungen 204, 205 nicht orthogonal zueinander angeordnet sind.

Der Transponder 208 kann auch in der in Fig. 17 dargestellten Lage von dem RFID-Schreib-/Lesegerät oder dem RFID-Lesegerät 108 ausgelesen werden.

Aufgrund der kurzen Entfernung zwischen dem Transponder 208 und den elektrisch leitfähigen Leitungen 204, 205, die in den Fig. 15 bis 17 als einfache Drähte ausgebildet sind, kann der Transponder 208 ohne weiteres von dem RFID-Schreib-/Lesegerät oder RFID-Lesegerät 108 ausgelesen werden. Die Drähte 204, 205 müssen nicht an das RFID-Schreib-/Lesegerät oder RFID-Lesegerät 108 angepasst, das heißt leistungsangepasst werden. Die Drähte 204, 205 sind vorteilhaft ungefähr gleich lang und werden 180° phasenverschoben angesprochen.

An den Enden 209, 210 der Drähte 204, 205 liegen relativ große elektromagnetische Felder an, so dass in diesen Bereichen Transponder 208 gut ausgelesen werden können, das heißt, dass in diesen Bereichen eine Kommunikation mit den Transpondern 208 sehr gut möglich ist.

Das RFID-Schreib-/Lesegerät oder RFID-Lesegerät 108 ist derart ausgebildet, dass nicht angepasste Drähte 204, 205 an dem RFID-Schreib-/Lesegerät oder dem RFID-Lesegerät 108 angeordnet werden können. Das RFID-Schreib-/Lesegerät oder RFID-Lesegerät 108 weist relativ kleine Leistungen auf.

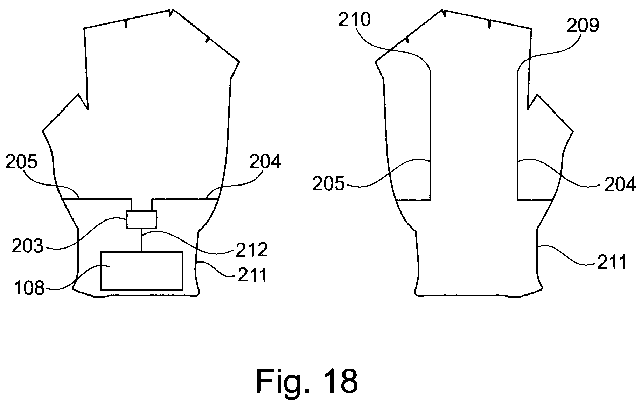

Gemäß Fig. 18 ist ein Handschuh 211 dargestellt. In der linken Darstellung ist eine Draufsicht auf eine Handoberseite gezeigt, in der rechten Darstellung ist eine Draufsicht auf eine Handunterseite gezeigt. Der Handschuh 211 weist keine Finger auf. An dem Handschuh 211 ist das RFID-Schreib-/Lesegerät oder RFID-Lesegerät 108 angeordnet sowie der Balun 203. Zwischen dem RFID-Schreib-/Lesegerät oder RFID-Lesegerät 108 und dem Balun 203 ist eine elektrisch leitfähige Verbindungsleitung 212 vorgesehen. Von dem Balun ausgehend sind die Drähte 204, 205 an dem Handschuh 211 angeordnet. In der rechten Darstellung, die die Unterseite des Handschuhs 211 darstellt, sind die Drähte 204, 205 an einer Handflächenseite angeordnet. Die Enden 209, 210 der Drähte 204, 205 sind ebenfalls im Handflächenbereich des Handschuhs 211 angeordnet. Beim Anfassen eines Gegenstandes (in Fig. 18 nicht dargestellt), werden die Enden 209, 210 der Drähte 204, 205 in unmittelbare Nähe des Transponders 208 gebracht und hierdurch kann die Information aus dem Transponder 208 ausgelesen werden.

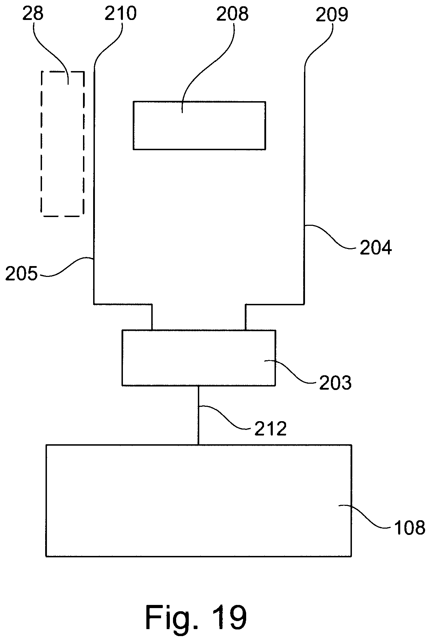

Fig. 19 veranschaulicht noch einmal ein RFID-Schreib-/Lesegerät oder RFID-Lesegerät 202, das über eine elektrisch leitfähige Verbindungsleitung 212 mit einem Balun 203 verbunden ist. Mit dem Balun 203 sind die elektrisch leitfähigen Leitungen 204, 205 verbunden, die die Enden 209, 210 aufweisen. Der Transponder 208, der mit einer durchgezogenen Linie dargestellt ist, ist derart ausgerichtet, dass eine kapazitive Kopplung stattfindet. Der gestrichelt dargestellte Transponder 208 ist in einer Ausrichtung angeordnet, dass eine Leitungskopplung stattfindet.

Der Balun 203 ist ein Bauteil zur Wandlung zwischen einem symmetrischen Leitungssystem und einem unsymmetrischen Leitungssystem. Vor allem in der Hochfrequenztechnik wird der Balun 203 auch als Symmetrierglied bezeichnet.

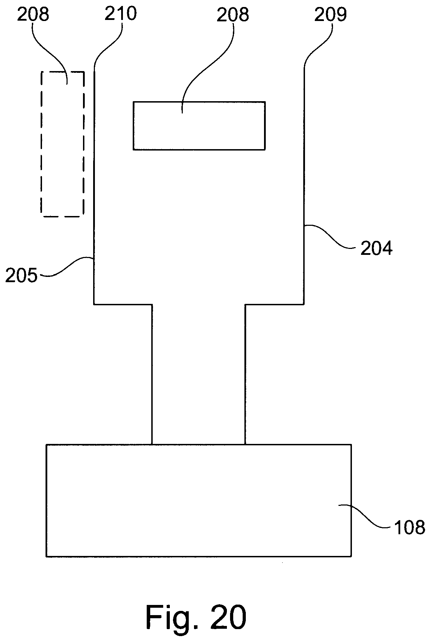

Gemäß Fig. 20 ist eine RFID-Schreib-/Lesegerät oder RFID-Lesegerät 108 mit einem symmetrischen Ausgang dargestellt. In diesem Fall sind die elektrisch leitfähigen Leitungen 204, 205 unmittelbar an dem RFID-Schreib-/Lesegerät oder RFID-Lesegerät 202 angeordnet. Auch in Fig. 20 ist mit der durchgezogenen Linie ein Transponder 208 dargestellt, mit dem eine kapazitive Kopplung stattfindet. Gestrichelt dargestellt ist ein Transponder 208, mit dem eine Leitungskopplung stattfindet.

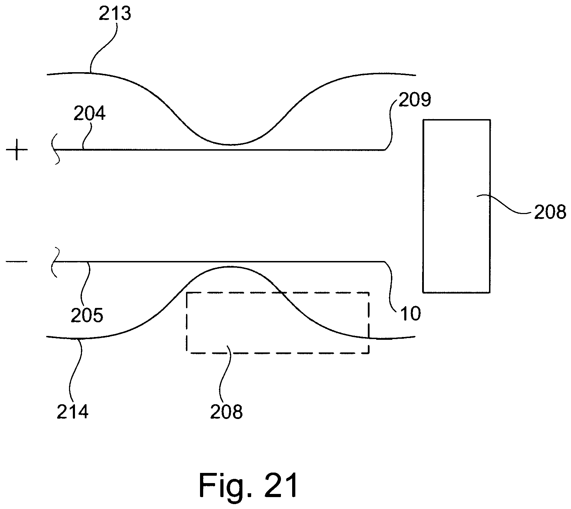

Fig. 21 zeigt die Drähte 204, 205 mit den Enden 209, 210. Schematisch sind Feldstärken 213, 214 der Drähte 204, 205 dargestellt. Der Verlauf der Feldstärke 213 des elektrischen Feldes des Drahtes 204 zeigt, dass ungefähr in der Mitte des Leiters 204 ein Minimum der Feldstärke liegt, während am Ende 209 des Leiters 204 ein Maximum der Feldstärke liegt. Gleiches gilt für den schematisch dargestellten Verlauf der Feldstärke 214 des Drahtes 205.

An den Enden 209, 210 der Drähte 204, 205 ist die Feldstärke sehr groß. Aus diesem Grunde lässt sich in diesem Bereich der mit durchgehender Linie dargestellte Transponder 208 über die kapazitive Kopplung oder der gestrichelt dargestellte Transponder 208 über eine Leitungskopplung sehr gut auslesen.

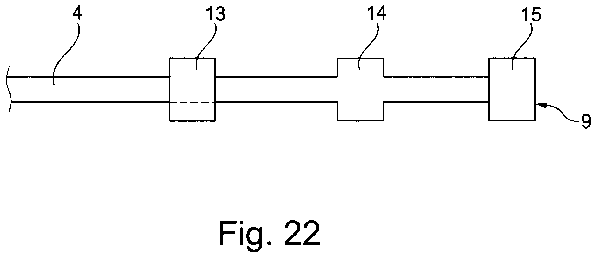

Fig. 22 zeigt den Draht 204. An dem Draht 204 sind zur Vergrößerung des kapazitiven Effektes metallische Flächen vorgesehen. Eine metallische Fläche 213 besteht aus einem Metallplättchen, welches an dem Draht 204 angeordnet, beispielsweise angelötet ist. Eine metallische Fläche 214 ist unmittelbar aus dem Draht 204 ausgebildet. Eine metallische Fläche 215 ist ebenfalls aus dem Draht ausgebildet und bildet das Ende 209 des Drahtes 204.

Die metallischen Flächen 214, 215, die unmittelbar aus dem Draht 204 ausgebildet sind, können durch eine Veränderung eines runden Querschnittes des Drahtes 204, beispielsweise eine Abflachung ausgebildet sein.

### Bezugszahlen

- 1: Regal
- 2: Ablagefach
- 3: Ablagefach
- 4: Ablagefach
- 5: Ablagefach
- 6: Ablagefach
- 7: Ablagefach
- 8: Ablagefach
- 9: Ablagefach
- 10: Ablagefach
- 11: Ablagefach
- 12: Ablagefach
- 13: Ablagefach
- 14: Transponder
- 15: Transponder
- 16: Transponder
- 17: Polarisationsebenen
- 18: Transponder
- 19: Transponder
- 20: Transponder
- 21: Ware
- 22: Transponder
- 23: Transponder
- 24: Transponder
- 25: Transponder
- 26: Transponder
- 27: Transponder
- 28: Transponder
- 29: Transponder
- 30: Transponder
- 31: Transponder
- 32: Transponder
- 33: Transponder
- 34: Transponder
- 35: Transponder
- 36: Transponder
- 37: Host-System
- 38: Regal
- 39: Fächer
- 40: Fächer
- 41: Fächer
- 42: Fächer
- 43: Fächer
- 44: Fächer
- 45: Fächer
- 46: Fächer
- 47: RFID-Lesegerät
- 48: RFID-Lesegerät
- 49: RFID-Lesegerät
- 101: Vorrichtung
- 102: Tragriemen
- 103: Hand
- 104: Zeigefinger
- 105: Unterarm/Handgelenk
- 106: Verschluss
- 107: Verschluss
- 108: RFID-Lesegerät
- 109: Stoffschalter
- 110: Daumen
- 111: Verbindungsleitung
- 112: Schlaufe
- 113: Schlaufe
- 114: Arbeitshandschuh
- 115: Öffnung
- 116: Druckknöpfe
- 117: Aussparung
- 118: Lasche
- 119: Stofftasche
- 120: erster Teil des Druckknopfes 16
- 121: zweiter Teil des Druckknopfes 16
- 122: Vorderseite der Tasche 19
- 123: Lasche
- 124: Verschluss
- 125: Schlitz
- 126: Öffnung
- 127: LED
- 128: Nähte
- 129: obere Gehäuseschale
- 130: untere Gehäuseschale
- 131: Zapfen
- 132: Innengewinde
- 133: Schraube
- 134: Federscheibe
- 135: Kontaktfläche Leiterplatte
- 136: Leiterplatte
- 137: Werkzeug
- 138: Gewinde
- 139: Kontaktfläche
- 140: Werkzeugansatz
- 141: Lage des Stoffschalters 9
- 142: Lage des Stoffschalters 9
- 143: Lage des Stoffschalters 9
- 144: Verbindungsleitung
- 145: Ausschnitt
- 146: elektrische Leitung
- 147: elektrische Leitung
- 148: elektrische Leitung
- 149: elektrische Leitung
- 150: elektronisches Bauteil
- 151: Entriegelungstaste
- 152: integriertes Funkmodul
- 153: Tasten
- 154: Beschleunigungssensor
- 155: Barcodeeinheit
- 156: RFID-Einheit
- 157: Lautsprecher
- 158: Vibrationseinheit
- 159: Akkumulator
- 201: Handschuh
- 203: Balun
- 204: Draht
- 205: Draht
- 206: Zeigefinger
- 207: Ringfinger
- 208: Transponder
- 209: Ende des Drahtes 4
- 210: Ende des Drahtes 5
- 211: Handschuh
- 212: Verbindungsleitung
- 213: metallische Fläche
- 214: metallische Fläche
- 215: metallische Fläche

## Patentansprüche

1. Lagersystem
- mit einer Vielzahl von Ablagefächern (2 - 13) und/oder Ablageorten zum Lagern von Waren (21)
- und mit wenigstens einer Vorrichtung zur Erfassung eines Zugriffs auf die Ablagefächer (2 - 13) und/oder die Ablageorte, die ein Entnehmen von Waren aus den Ablagefächern (2 - 13) oder den Ablageorten oder ein Bestücken der Ablagefächer (2 - 13) oder der Ablageorte mit Waren automatisch erfasst,
- bei dem jedes Ablagefach (2 - 13) und/oder jeder Ablageort wenigstens einen diesem Ablagefach (2 - 13) oder Ablageort zugeordneten RFID-Transponder (14, 15, 16, 18, 19, 20, 22 - 36, 39 - 46) aufweist,
- bei dem die Vorrichtung zur Erfassung des Zugriffs mit Befestigungsmitteln an einer Person befestigbar ist,
- wobei die Vorrichtung zur Erfassung des Zugriffs auf die Ablagefächer (2 - 13) und/oder die Ablageorte wenigstens ein RFID-Schreib-/Lesegerät (47, 48, 49, 108) oder ein RFID-Lesegerät (47, 48, 49, 108) aufweist, wobei jedes RFID-Schreib-/Lesegerät (47, 48, 49, 108) oder jedes RFID-Lesegerät (47, 48, 49, 108) wenigstens eine Antenne aufweist,
- wobei das RFID-Schreib-/Lesegerät (47, 48, 49, 108) oder das RFID-Lesegerät (47, 48, 49, 108) als ein Transponderantworten des wenigstens einen Transponders (14, 15, 16, 18, 19, 20, 22 - 36, 39 - 46) erfassendes RFID-Schreib-/ Lesegerät (47, 48, 49, 108) oder RFID-Lesegerät (47, 48, 49, 108) ausgebildet ist,
- wobei eine Auswerteeinheit und/oder ein Host-System vorgesehen ist zur Zuordnung der Ware (21) zu dem Ablagefach (2 - 13) und/oder zu dem Ablageort des diesem zugeordneten Transponders (14, 15, 16, 18, 19, 20, 22 - 36, 39 - 46)
**dadurch gekennzeichnet,**
- **dass** das RFID-Schreib-/Lesegerät (47, 48, 49, 108) oder das RFID-Lesegerät (47, 48, 49, 108) als ein wenigstens einen Received Signal Strength Indicator, RSSI-Wert, der Transponderantworten erfassendes und auswertendes RFID-Schreib-/Lesegerät (47, 48, 49, 108) oder RFID-Lesegerät (47, 48, 49, 108) ausgebildet ist,
- **dass** das RFID-Schreib-/Lesegerät (47, 48, 49, 108) oder das RFID-Lesegerät (47, 48, 49, 108) als ein den Transponder (14, 15, 16, 18, 19, 20, 22 - 36, 39 - 46) mit dem größten RSSI-Wert erfassendes RFID-Schreib-/Lesegerät (47, 48, 49, 108) oder RFID-Lesegerät (47, 48, 49, 108) ausgebildet ist, und
- **dass** an wenigstens einem Ablagefach (2 - 13) und/oder an wenigstens einem Ablageort wenigstens zwei Transponder (22, 23; 24, 25; 26, 27) angeordnet sind, wobei Polarisationsebenen (17) der beiden Transponder (22, 23; 24, 25; 26, 27) eines Ablagefaches (2 - 13) oder eines Ablageortes zueinander orthogonal ausgebildet sind.

2. Lagersystem nach Anspruch 1, **dadurch gekennzeichnet, dass** das RFID-Schreib-/Lesegerät (47, 48, 49, 108) oder das RFID-Lesegerät (47, 48, 49, 108) als ein sämtliche im Erfassungsbereich empfangene Transponderantworten der Transponder trennendes RFID-Schreib-/Lesegerät (47, 48, 49, 108) oder RFID-Lesegerät (47, 48, 49, 108) ausgebildet ist.

3. Lagersystem nach einem der vorhergehenden Ansprüche, **dadurch gekennzeichnet, dass** das RFID-Schreib-/Lesegerät (47, 48, 49, 108) oder das RFID-Lesegerät (47, 48, 49, 108) als ein eine Anzahl von Antworten von Transpondern (14, 15, 16, 18, 19, 20, 22 - 36, 39 - 46) im Erfassungsbereich erfassendes RFID-Schreib-/Lesegerät (47, 48, 49, 108) oder RFID-Lesegerät (47, 48, 49, 108) ausgebildet ist.

4. Lagersystem nach einem der vorhergehenden Ansprüche, **dadurch gekennzeichnet, dass** jedem Transponder (14, 15, 16, 18, 19, 20, 22 - 36, 39 - 46) in einem Host-System (37) ein Ablagefach (2 - 13) oder ein Ablageort zugewiesen ist.

5. Lagersystem nach einem der vorhergehenden Ansprüche, **dadurch gekennzeichnet, dass** das RFID-Schreib-/Lesegerät (47, 48, 49, 108) oder das RFID-Lesegerät (47, 48, 49, 108) als ein den wenigstens einen Transponder (14, 15, 16, 18, 19, 20, 22 - 36, 39 - 46) mehrfach auslesendes RFID-Schreib-/Lesegerät (47, 48, 49, 108) oder RFID-Lesegerät (47, 48, 49, 108) ausgebildet ist.

6. Lagersystem nach einem der Ansprüche 1 bis 5, **dadurch gekennzeichnet, dass** an wenigstens einem Ablagefach (2 - 13) und/oder an wenigstens einem Ablageort jeweils drei oder vier Transponder (28 - 36) angeordnet sind, wobei wenigstens zwei Transponder (28 - 36) zueinander orthogonale Polarisationsebenen (17) aufweisen.

7. Lagersystem nach einem der vorhergehenden Ansprüche, **dadurch gekennzeichnet, dass** das RFID-Schreib-/Lesegerät (47, 48, 49, 108) oder das RFID-Lesegerät (47, 48, 49, 108) mittels eines Arbeitshandschuhs (114) mit oder ohne Finger oder eines Tragriemens (102) an einer Hand (103), insbesondere auf einem Handrücken anordbar ist.

8. Lagersystem nach einem der vorhergehenden Ansprüche, **dadurch gekennzeichnet, dass** das RFID-Schreib-/Lesegerät (47, 48, 49, 108) oder das RFID-Lesegerät (47, 48, 49, 108) zwei Antennen aufweist, die senkrecht zueinander angeordnete Abstrahlrichtungen aufweisen.

9. Lagersystem nach Anspruch 8, **dadurch gekennzeichnet, dass** das RFID-Schreib-/Lesegerät (47, 48, 49, 108) oder das RFID-Lesegerät (47, 48, 49, 108) wenigstens einen Lagesensor und/oder wenigstens einen Umschalter aufweist, derart, dass in Abhängigkeit der Lage der Antennen des RFID-Schreib-/Lesegerätes (47, 48, 49, 108) oder des RFID-Lesegerätes (47, 48, 49, 108) eine der beiden Antennen aktiv ist.

10. Lagersystem nach Anspruch 7 oder 9, **dadurch gekennzeichnet, dass** an dem Arbeitshandschuh (114) oder an dem Tragriemen (102) wenigstens ein Anforderungstaster und/oder ein Taster zur Betätigung des Umschalters angeordnet ist.

11. Lagersystem nach einem der vorhergehenden Ansprüche, **dadurch gekennzeichnet, dass** das RFID-Schreib-/ Lesegerät (47, 48, 49, 108) oder das RFID-Lesegerät (47, 48, 49, 108) lösbar an dem Tragriemen (102) oder dem Arbeitshandschuh (114) angeordnet ist.

12. Lagersystem nach einem der vorhergehenden Ansprüche, **dadurch gekennzeichnet, dass** das RFID-Schreib-/Lesegerät (47, 48, 49, 108) oder das RFID-Lesegerät (47, 48, 49, 108) zusätzlich ein Identifikationsgerät für an den Waren angeordnete Identifikationsmittel, insbesondere einen Barcodeleser aufweist.

13. Lagersystem nach einem der Ansprüche 10 bis 12, **dadurch gekennzeichnet, dass** der Taster (109) des Umschalters und/oder der Anforderungstaster an einem Finger, insbesondere Zeigefinger des Arbeitshandschuhs (114) oder an einer an einem Finger, insbesondere Zeigefinger befestigbaren Schlaufe (113) des Tragriemens (102) angeordnet ist.

14. Lagersystem nach einem der vorhergehenden Ansprüche, **dadurch gekennzeichnet,**
- **dass** das RFID-Schreib-/Lesegerät (47, 48, 49, 108) oder das RFID-Lesegerät (47, 48, 49, 108) an einer Vorrichtung (102, 114) zur Anordnung an einer Hand (103) anordbar ist,
- **dass** das RFID-Schreib-/Lesegerät (47, 48, 49, 108) oder das RFID-Lesegerät (47, 48, 49, 108) einen unsymmetrischen Antennenausgang aufweist,
- **dass** das RFID-Schreib-/Lesegerät (47, 48, 49, 108) oder das RFID-Lesegerät (47, 48, 49, 108) eine Nahfeldkoppeleinheit aufweist, die einen Balun (203) zur Symmetrierung eines unsymmetrischen Signales aufweist, und das wenigstens eine elektrisch leitfähige Leitung (204, 205) zum Aufbau eines Feldes zur Ankopplung an einen Transponder (14, 15, 16, 18, 19, 20, 22 - 36, 39 - 46) vorgesehen ist,
- und **dass** die wenigstens eine elektrisch leitfähige Leitung (204, 205) der Nahfeldkoppeleinheit als nicht angepasste elektrisch leitfähige Leitung (204, 205) ausgebildet ist.

15. Lagersystem nach einem der Ansprüche 1 bis 13, **dadurch gekennzeichnet,**
- **dass** das RFID-Schreib-/Lesegerät (47, 48, 49, 108) oder das RFID-Lesegerät (47, 48, 49, 108) an einer Vorrichtung (114, 102) zur Anordnung an einer Hand anordbar ist,
- **dass** das RFID-Schreib-/Lesegerät (47, 48, 49, 108) oder das RFID-Lesegerät (47, 48, 49, 108) einen symmetrischen Antennenausgang aufweist,
- **dass** das RFID-Schreib-/Lesegerät (47, 48, 49, 108) oder das RFID-Lesegerät (47, 48, 49, 108) eine Nahfeldkoppeleinheit aufweist, die wenigstens eine elektrisch leitfähige Leitung (204, 205) zum Aufbau eines Feldes zur Ankopplung an einen Transponder (14, 15, 16, 18, 19, 20, 22 - 36, 39 - 46) vorgesehen ist,
- und **dass** die wenigstens eine elektrisch leitfähige Leitung (204, 205) der Nahfeldkoppeleinheit als nicht angepasste elektrisch leitfähige Leitung (204, 205) ausgebildet ist.

16. Lagersystem nach einem der Ansprüche 14 oder 15, **dadurch gekennzeichnet, dass** die wenigstens eine elektrisch leitfähige Leitung (204, 205) in der Vorrichtung zur Erfassung eines Zugriffs auf die Ablagefächer (2 - 13) und/oder die Ablageorte
- in oder auf wenigstens einem Finger des Handschuhs (114) oder
- in oder auf einer Handflächenseite des Handschuhs (114) oder des Tragriemens (102) oder
- in oder auf einer Handrückenseite des Handschuhs (114) oder des Tragriemens (102) oder
- in oder auf einer Handseite des Handschuhs (102) oder des Tragriemens (102) oder
- in oder auf einer Fingerseite des Handschuhs (114) oder
- im Bereich eines Handgelenks des Handschuhs (114) oder des Tragriemens (102) angeordnet ist.

17. Verfahren zur Erfassung eines Zugriffs auf Ablagefächer (2 - 13) und/oder Ablageorte für ein Lagersystem, mit den Merkmalen gemäß Anspruch 1, das ein Entnehmen von Waren (21) aus den Ablagefächern (2 - 13) oder den Ablageorten oder ein Bestücken der Ablagefächer (2 - 13) oder der Ablageorte mit Waren (21) automatisch erfasst, **dadurch gekennzeichnet,**
- **dass** dem oder den Transpondern (14, 15, 16, 18, 19, 20, 22 - 36, 39 - 46) im Host-System (37) ein Ablagefach (2 - 13) oder ein Ablageort zugewiesen wird,
- **dass** die Vorrichtung zur Erfassung des Zugriffs auf die Ablagefächer (2 - 13) und/oder die Ablageorte Transponderantworten des wenigstens einen Transponders erfasst,
- **dass** das RFID-Schreib-/Lesegerät (47, 48, 49, 108) oder das RFID-Lesegerät (47, 48, 49, 108) wenigstens einen Received Signal Strength Indicator, RSSI-Wert, der Transponderantworten erfasst und auswertet,
- **dass** das RFID-Schreib-/Lesegerät (47, 48, 49, 108) oder das RFID-Lesegerät (47, 48, 49, 108) den Transponder (14, 15, 16, 18, 19, 20, 22 - 36, 39 - 46) mit dem größten RSSI-Wert erfasst, und
- **dass** die Ware dem Ablagefach (2 - 13) und/oder Ablageort des diesem zugeordneten Transponders (14, 15, 16, 18, 19, 20, 22 - 36, 39 - 46) zugeordnet wird.

18. Verfahren nach Anspruch 17, **dadurch gekennzeichnet, dass** sämtliche Transponder (14, 15, 16, 18, 19, 20, 22 - 36, 39 - 46) im Erfassungsbereich des RFID-Schreib-/Lesegerätes (47, 48, 49, 108) oder des RFID-Lesegerätes (47, 48, 49, 108) gelesen und der RSSI-Wert bestimmt wird.

## Claims

1. A storage system
- having a multiplicity of storage compartments (2 - 13) and/or storage locations for storing goods (21),
- and having at least one device for detecting access to the storage compartments (2 - 13) and/or the storage locations which automatically detects the removal of goods from the storage compartments (2 - 13) or the storage locations, or the filling of the storage compartments (2 - 13) or the storage locations with goods,
- in which storage system each storage compartment (2 - 13) and/or each storage location has at least one RFID transponder (14, 15, 16, 18, 19, 20, 22 - 36, 39 - 46) associated with this storage compartment (2 - 13) or storage location,
- in which storage system the device for detecting the access can be fastened to a person using fastening means,
- wherein the device for detecting the access to the storage compartments (2 - 13) and/or the storage locations has at least one RFID reader/writer (47, 48, 49, 108) or one RFID reader (47, 48, 49, 108), wherein each RFID reader/writer (47, 48, 49, 108) or each RFID reader (47, 48, 49, 108) has at least one antenna,
- wherein the RFID reader/writer (47, 48, 49, 108) or the RFID reader (47, 48, 49, 108) is formed as an RFID reader/writer (47, 48, 49, 108) or RFID reader (47, 48, 49, 108) which detects transponder responses of the at least one transponder (14, 15, 16, 18, 19, 20, 22 - 36, 39 - 46),
- wherein an evaluation unit and/or a host system is provided for associating the goods (21) with the storage compartment (2 - 13) and/or the storage location of that transponder (14, 15, 16, 18, 19, 20, 22 - 36, 39 - 46) which is associated therewith,
**characterised in that**
- the RFID reader/writer (47, 48, 49, 108) or the RFID reader (47, 48, 49, 108) is formed as an RFID reader/writer (47, 48, 49, 108) or RFID reader (47, 48, 49, 108) which detects and evaluates at least one received signal strength indicator, RSSI value, of the transponder responses,
- the RFID reader/writer (47, 48, 49, 108) or the RFID scanner (47, 48, 49, 108) is formed as an RFID reader/writer (47, 48, 49, 108) or RFID scanner (47, 48, 49, 108) which detects the transponder (14, 15, 16, 18, 19, 20, 22 - 36, 39 - 46) having the highest RSSI value, and
- at least two transponders (22, 23; 24, 25; 26, 27) are arranged on at least one storage compartment (2 - 13) and/or on at least one storage location, with planes of polarisation (17) of the two transponders (22, 23; 24, 25; 26, 27) of a storage compartment (2 - 13) or a storage location being formed orthogonally to each other.

2. A storage system according to claim 1, **characterised in that** the RFID reader/writer (47, 48, 49, 108) or the RFID reader (47, 48, 49, 108) is formed as an RFID reader/writer (47, 48, 49, 108) or RFID reader (47, 48, 49, 108) which separates all the transponder responses of the transponders received in the detection zone.

3. A storage system according to one of the preceding claims, **characterised in that** the RFID reader/writer (47, 48, 49, 108) or the RFID reader (47, 48, 49, 108) is formed as an RFID reader/writer (47, 48, 49, 108) or RFID reader (47, 48, 49, 108) which detects a number of responses of transponders (14, 15, 16, 18, 19, 20, 22 - 36, 39 - 46) in the detection zone.

4. A storage system according to one of the preceding claims, **characterised in that** one storage compartment (2 - 13) or one storage location is assigned to each transponder (14, 15, 16, 18, 19, 20, 22 - 36, 39 - 46) in a host system (37).

5. A storage system according to one of the preceding claims, **characterised in that** the RFID reader/writer (47, 48, 49, 108) or the RFID reader (47, 48, 49, 108) is formed as an RFID reader/writer (47, 48, 49, 108) or RFID reader (47, 48, 49, 108) which reads out the at least one transponder (14, 15, 16, 18, 19, 20, 22 - 36, 39 - 46) multiple times.

6. A storage system according to one of claims 1 to 5, **characterised in that** three or four transponders (28 - 36) in each case are arranged on at least one storage compartment (2 - 13) and/or at at least one storage location, with at least two transponders (28 - 36) having planes of polarisation (17) which are orthogonal to each other.

7. A storage system according to one of the preceding claims, **characterised in that** the RFID reader/writer (47, 48, 49, 108) or the RFID reader (47, 48, 49, 108) can be arranged on a hand (103), in particular the back of a hand, by means of a work glove (114) with or without fingers, or a carrying strap (102).

8. A storage system according to one of the preceding claims, **characterised in that** the RFID reader/writer (47, 48, 49, 108) or the RFID reader (47, 48, 49, 108) has two antennas which have directions of emission arranged perpendicularly to each other.

9. A storage system according to claim 8, **characterised in that** the RFID reader/writer (47, 48, 49, 108) or the RFID reader (47, 48, 49, 108) has at least one position sensor and/or at least one changeover switch, such that one of the two antennas is active as a function of the position of the antennas of the RFID reader/writer (47, 48, 49, 108) or of the RFID reader (47, 48, 49, 108).

10. A storage system according to claim 7 or 9, **characterised in that** at least one request button and/or one button for actuating the changeover switch is arranged on the work glove (114) or on the carrying strap (102).

11. A storage system according to one of the preceding claims, **characterised in that** the RFID reader/writer (47, 48, 49, 108) or the RFID reader (47, 48, 49, 108) is arranged detachably on the carrying strap (102) or the work glove (114).

12. A storage system according to one of the preceding claims, **characterised in that** the RFID reader/writer (47, 48, 49, 108) or the RFID reader (47, 48, 49, 108) additionally has an identification device for identification means arranged on the goods, in particular a barcode reader.

13. A storage system according to one of claims 10 to 12, **characterised in that** the button (109) of the changeover switch and/or the request button is arranged on a finger, in particular forefinger, of the work glove (114) or on a loop (113), which can be fastened to a finger, in particular forefinger, of the carrying strap (102).

14. A storage system according to one of the preceding claims, **characterised in that**
- the RFID reader/writer (47, 48, 49, 108) or the RFID reader (47, 48, 49, 108) can be arranged on a device (102, 114) for being arranged on a hand (103),
- the RFID reader/writer (47, 48, 49, 108) or the RFID reader (47, 48, 49, 108) has an asymmetrical antenna output,
- the RFID reader/writer (47, 48, 49, 108) or the RFID reader (47, 48, 49, 108) has a near-field coupling unit which has a balun (203) for balancing an asymmetrical signal, and **in that** at least one electrically conductive line (204, 205) is provided for setting up a field for coupling to a transponder (14, 15, 16, 18, 19, 20, 22 - 36, 39 - 46),
- and **in that** the at least one electrically conductive line (204, 205) of the near-field coupling unit is formed as a non-adapted electrically conductive line (204, 205).

15. A storage system according to one of claims 1 to 13, **characterised in that**
- the RFID reader/writer (47, 48, 49, 108) or the RFID reader (47, 48, 49, 108) can be arranged on a device (114, 102) for being arranged on a hand,
- the RFID reader/writer (47, 48, 49, 108) or the RFID reader (47, 48, 49, 108) has an asymmetrical antenna output,
- the RFID reader/writer (47, 48, 49, 108) or the RFID reader (47, 48, 49, 108) has a near-field coupling unit, which has at least one electrically conductive line (204, 205) for setting up a field for coupling to a transponder (14, 15, 16, 18, 19, 20, 22 - 36, 39 - 46),
- and **in that** the at least one electrically conductive line (204, 205) of the near-field coupling unit is formed as a non-adapted electrically conductive line (204, 205).

16. A storage system according to one of claims 14 or 15, **characterised in that** the at least one electrically conductive line (204, 205) in the device for detecting access to the storage compartments (2 - 13) and/or the storage locations is arranged
- in or on at least one finger of the glove (114), or
- in or on one palm side of the glove (114) or of the carrying strap (102), or
- in or on one back-of-the-hand side of the glove (114) or of the carrying strap (102), or
- in or on one hand side of the glove (102) or of the carrying strap (102), or
- in or on one finger side of the glove (114), or
- in the region of a wrist of the glove (114) or of the carrying strap (102).

17. A method for detecting access to storage compartments (2 - 13) and/or storage locations for a storage system, the method having the features in accordance with claim 1, which automatically detects the removal of goods (21) from the storage compartments (2 - 13) or the storage locations, or the filling of the storage compartments (2 - 13) or the storage locations with goods (21),
**characterised in that**
- a storage compartment (2 - 13) or a storage location is assigned to the transponder or transponders (14, 15, 16, 18, 19, 20, 22 - 36, 39 - 46) in the host system (37),
- the device for detecting access to the storage compartments (2 - 13) and/or the storage locations detects transponder responses of the at least one transponder,
- the RFID reader/writer (47, 48, 49, 108) or the RFID reader (47, 48, 49, 108) detects and evaluates at least one received signal strength indicator, RSSI value, of the transponder responses,
- the RFID reader/writer (47, 48, 49, 108) or the RFID reader (47, 48, 49, 108) detects the transponder (14, 15, 16, 18, 19, 20, 22 - 36, 39 - 46) having the highest RSSI value, and
- the goods are associated with the storage compartment (2 - 13) and/or storage location of the transponder (14, 15, 16, 18, 19, 20, 22 - 36, 39 - 46) associated therewith.

18. A method according to claim 17, **characterised in that** all the transponders (14, 15, 16, 18, 19, 20, 22 - 36, 39 - 46) in the detection zone of the RFID reader/writer (47, 48, 49, 108) or of the RFID reader (47, 48, 49, 108) are read and the RSSI value is determined.

## Revendications

1. Système de stockage
- avec une pluralité de compartiments de stockage (2 à 13) et / ou d'emplacements de stockage pour stocker des marchandises (21)
- et avec au moins un dispositif pour détecter l'accès aux compartiments de stockage (2 à 13) et/ou aux emplacements de stockage, la sortie de marchandises des compartiments de stockage (2 à 13) ou des emplacements de stockage ou le chargement des compartiments de stockage (2 à 13) ou les emplacements de stockage avec marchandises sont automatiquement enregistrés,
- dans lequel chaque compartiment de stockage (2 à 13) et/ou chaque emplacement de stockage comporte au moins un transpondeur RFID (14, 15, 16, 18, 19, 20, 22 à 36, 39 à 46) qui lui est affecté,
- dans lequel le dispositif de détection d'accès peut être fixé à une personne avec des moyens de fixation,
- le dispositif pour détecter l'accès aux compartiments de stockage (2 à 13) et/ou aux emplacements de stockage présente au moins un dispositif de lecture/écriture RFID (47, 48, 49, 108) ou un lecteur RFID (47, 48, 49, 108), dans lequel chaque dispositif de lecture/écriture RFID (47, 48, 49, 108) ou chaque lecteur RFID (47, 48, 49, 108) comporte au moins une antenne,
- le dispositif d'écriture/lecture RFID (47, 48, 49, 108) ou le lecteur RFID (47, 48, 49, 108) est réalisé en tant que transpondeur répondant à l'au moins un transpondeur (14, 15, 16, 18, 19, 20, 22-36, 39-46) ou dispositif d'écriture/lecture (47, 48, 49, 108) ou le lecteur RFID (47, 48, 49, 108),
- une unité d'évaluation et/ou un système hôte sont prévus pour affecter les marchandises (21) au compartiment de stockage (2 à 13) et/ou au transpondeur (14, 15, 16, 18, 19, 20, 22 à 36, 39 à 46) affecté à l'emplacement de stockage.
**caractérisé en ce que**
- le dispositif de lecture/écriture RFID (47, 48, 49, 108) est réalisé sous forme d'un dispositif d'écriture/lecture RFID (47, 48, 49, 108) qui saisit et évalue au moins un indicateur d'intensité du signal reçu, valeur RSSI, du dispositif d'écriture/lecture (47, 48, 49, 108) ou du lecteur RFID (47, 48, 49, 108) ;
- le dispositif de lecture/écriture RFID (47, 48, 49, 108) ou le lecteur RFID (47, 48, 49, 108) est réalisé sous forme de transpondeur (14, 15, 16, 18, 19, 20, 22 à 36, 39 à 46) avec dispositif de lecture/écriture RFID (47, 48, 49, 108) ou lecteur RFID (47, 48, 49, 108) détectant la plus grande valeur RSSI ; et
au moins deux transpondeurs (22, 23 ; 24, 25 ; 26, 27) sont disposés au niveau d'un compartiment de stockage (2 - 13) ou d'un emplacement de stockage, les plans de polarisation (17) des deux transpondeurs (22, 23 ; 24, 26, 27) d'un compartiment de stockage (2 13) ou d'un emplacement de stockage étant orthogonaux l'un à l'autre.

2. Système de stockage selon la revendication 1, **caractérisé en ce que** le dispositif de lecture/écriture RFID (47, 48, 49, 108) ou le lecteur RFID (47, 48, 49, 108) est réalisé sous forme de transpondeur qui répond à tous les transpondeurs reçus en la zone de détection du dispositif d'écriture/lecture RFID (47, 48, 49, 108) ou le lecteur RFID (47, 48, 49, 108) en les séparant.

3. Système de stockage selon l'une des revendications précédentes, **caractérisé en ce que** le dispositif d'écriture/lecture RFID (47, 48, 49, 108) ou le lecteur RFID (47, 48, 49, 108) est réalisé sous forme de dispositif d'écriture/lecture RFID (47, 48 49, 108) ou lecteur RFID (47, 48, 49, 108) qui répond à un nombre de réponses des transpondeurs (14, 15, 16, 18, 19, 20, 22, 36, 39 - 46) situés dans la zone de détection.

4. Système de stockage selon l'une des revendications précédentes, **caractérisé en ce que** à chaque transpondeur (14, 15, 16, 18, 19, 20, 22 - 36, 39 - 46) un compartiment de stockage (2 13) ou un emplacement de stockage est attribué dans un système hôte (37).

5. Système de stockage selon l'une des revendications précédentes, **caractérisé en ce que** le dispositif de lecture/écriture RFID (47, 48, 49, 108) ou le lecteur RFID (47, 48, 49, 108) est réalisé comme dispositif de lecture/écriture RFID (47, 48, 49, 108) ou lecteur RFID (47, 48, 49, 108) à lectures multiples des au moins un transpondeur (14, 15, 16, 18, 19, 20, 22 36, 39 - 46).

6. Système de stockage selon l'une des revendications 1 à 5, **caractérisé en ce que** trois ou quatre transpondeurs (28 - 36) sont disposés sur au moins un compartiment de stockage (2 - 13) et/ou sur au moins un emplacement de stockage, avec au moins deux les transpondeurs (28 - 36) ont des plans de polarisation mutuellement orthogonaux (17).

7. Système de stockage selon l'une des revendications précédentes, **caractérisé en ce que** le dispositif d'écriture/lecture RFID (47, 48, 49, 108) ou le dispositif de lecture RFID (47, 48, 49, 108) peuvent être disposés sur une main (103), notamment sur le dos d'une main, en utilisant un gant de travail (114) avec ou sans doigts ou une sangle de portage (102).

8. Système de stockage selon l'une des revendications précédentes, **caractérisé en ce que** le dispositif de lecture/écriture RFID (47, 48, 49, 108) ou le lecteur RFID (47, 48, 49, 108) présente deux antennes disposées perpendiculairement à une un autre a des directions d'émission.

9. Système de stockage selon la revendication 8, **caractérisé en ce que** le dispositif de lecture/écriture RFID (47, 48, 49, 108) ou le lecteur RFID (47, 48, 49, 108) comporte au moins un capteur de position et/ou au moins un interrupteur est tel que selon la position des antennes du dispositif de lecture/écriture RFID (47, 48, 49, 108) ou du lecteur RFID (47, 48, 49, 108) l'une des deux antennes est active.

10. Système de stockage selon la revendication 7 ou 9, **caractérisé en ce qu'**au moins un bouton de demande et/ou un bouton d'actionnement de l'interrupteur est agencé sur le gant de travail (114) ou sur la sangle de portage (102).

11. Système de stockage selon l'une des revendications précédentes, **caractérisé en ce que** le dispositif de lecture/écriture RFID (47, 48, 49, 108) ou le lecteur RFID (47, 48, 49, 108) est disposé de manière amovible sur la sangle de portage (102) ou le gant de travail (114).

12. Système de stockage selon l'une des revendications précédentes, **caractérisé en ce que** le dispositif de lecture/écriture RFID (47, 48, 49, 108) ou le lecteur RFID (47, 48, 49, 108) comporte également un dispositif d'identification du des moyens d'identification agencés pour les marchandises, notamment munis d'un lecteur de code-barres.

13. Système de stockage selon l'une des revendications 10 à 12, **caractérisé en ce que** le bouton (109) du commutateur et/ou le bouton de demande est disposé sur un doigt, notamment l'index, du gant de travail (114) ou sur une boucle (113) de la sangle de portage (102) qui peut être fixée à un doigt, en particulier à l'index.

14. Système de stockage selon l'une des revendications précédentes, **caractérisé en ce que**
- le dispositif de lecture/écriture RFID (47, 48, 49, 108) ou le lecteur RFID (47, 48, 49, 108) peut être agencé sur un dispositif (102, 114) pour être disposé sur une main (103),
que le dispositif d'écriture/lecture RFID (47, 48, 49, 108) ou le dispositif de lecture RFID (47, 48, 49, 108) présente une sortie d'antenne asymétrique,
**en ce que** le dispositif de lecture/écriture RFID (47, 48, 49, 108) ou le lecteur RFID (47, 48, 49, 108) présente une unité de couplage en champ proche qui présente un symétriseur (203) pour équilibrer un signal asymétrique, et la au moins une ligne électriquement conductrice (204, 205) pour créer un champ pour le couplage à un transpondeur (14, 15, 16, 18, 19, 20, 22 36, 39 - 46) est prévue, et que la au moins une ligne électriquement conductrice (204, 205) de l'unité de couplage de champ proche est réalisée sous la forme d'une ligne électriquement conductrice (204, 205) non adaptée.

15. Système de stockage selon l'une des revendications 1 à 13, **caractérisé en ce que** le dispositif de lecture/écriture RFID (47, 48, 49, 108) ou le lecteur RFID (47, 48, 49, 108) est monté sur un dispositif (114 , 102) peut être agencé d'une part de sorte que le dispositif de lecture/écriture RFID (47, 48, 49, 108) ou le lecteur RFID (47, 48, 49, 108) présente une sortie d'antenne symétrique, que le dispositif de lecture/écriture RFID (47, 48, 49, 108) ou le lecteur RFID (47, 48, 49, 108) présente une unité de couplage de champ proche, qui présente au moins une ligne électriquement conductrice (204, 205) pour créer un champ de couplage à un transpondeur (14, 15, 16, 18, 19, 20, 22, 36, 39 - 46) est fourni,
et **en ce que** la au moins une ligne électriquement conductrice (204, 205) de l'unité de couplage de champ proche est conçue comme une ligne électriquement conductrice non adaptée (204, 205).

16. Système de stockage selon l'une des revendications 14 ou 15, **caractérisé en ce que** la au moins une ligne électriquement conductrice (204, 205) du dispositif de détection d'accès aux compartiments de stockage (2-13) et/ou aux emplacements de stockage
- dans ou sur au moins un doigt du gant (114), ou
- dans ou sur un côté paume du gant (114) ou de la sangle de portage (102), ou dans ou sur un côté dorsal du gant (114) ou de la sangle de portage (102), ou
- dans ou sur un côté du gant (102) ou de la sangle de portage (102), ou
- dans ou sur le côté doigt du gant (114), ou
- est disposé au niveau d'un poignet du gant (114) ou de la sangle de portage (102).

17. Procédé de détection d'accès à des compartiments de stockage (2-13) et/ou des emplacements de stockage pour un système de stockage, présentant les caractéristiques de la revendication 1, le retrait de marchandises (21) des compartiments de stockage (2-13) ou les emplacements de stockage ou le remplisage des compartiments de stockage (2 - 13) ou des emplacements de stockage avec des marchandises (21) est automatiquement enregistré,
**caractérisé en ce que**
un compartiment de stockage (2-13) ou à un emplacement de stockage est associé à un transpondeur ou les transpondeurs (14, 15, 16, 18, 19, 20, 22-36, 39-46) dans le système hôte (37) ;
le dispositif pour la détection d'accès aux compartiments de stockage (2 - 13) et/ou aux emplacements de stockage détecte les réponses de l'au moins un transpondeur ;
le dispositif de lecture/écriture RFID (47, 48, 49, 108) ou le lecteur RFID (47, 48, 49, 108) détecte et évalue au moins un indicateur d'intensité du signal reçu, valeur RSSI, des réponses de transpondeur ;
le dispositif de lecture/écriture RFID (47, 48, 49, 108) ou le lecteur RFID (47, 48, 49, 108) détecte le transpondeur (14, 15, 16, 18, 19, 20, 22-36, 39-46) avec la plus grande valeur RSSI et
les marchandises sont affectés au compartiment de stockage (2-13) et/ou à l'emplacement de stockage du transpondeur qui lui est affecté (14, 15, 16, 18, 19, 20, 22 - 36, 39 - 46).

18. Procédé selon la revendication 17, **caractérisé en ce que** tous les transpondeurs (14, 15, 16, 18, 19, 20, 22 - 36, 39 - 46) dans la plage de détection du dispositif de lecture/écriture RFID (47, 48, 49, 108) ou le lecteur RFID (47, 48, 49, 108) sont lus et la valeur RSSI est déterminée.
